# EUROPÄISCHE PATENTANMELDUNG

(11) **EP 2 623 454 A1**
(43) Veröffentlichungstag der Anmeldung: **07.08.2013**
(21) Anmeldenummer: 13000494.8
(22) Anmeldetag: 31.01.2013
(51) Int. Cl.: B66C 9/08, F16C 13/00

(54) **Laufradblock sowie Verfahren zur reversiblen Montage eines an einer Befestigungsvorrichtung befestigen Laufradblocks**

(30) Priorität: 03.02.2012 DE 102012002153
(71) Anmelder: Karl Georg Stahlherstellungs- und Verarbeitungs GmbH, 57612 Ingelbach-Bahnhof (DE)
(72) Erfinder: Grab, Werner, 57635 Oberirsen (DE)
(74) Vertreter: Maxton Langmaack & Partner

(57) **Zusammenfassung**

Es wird ein Laufradblock (1) vorgeschlagen mit einem wenigstens zu einer Seite offenen Blechgehäuse. Der Laufradblock weist hierbei ein Laufrad (7) auf, das mit einem ersten Außenring (11) eines ersten Lagers (8) und einem zweiten Außenring (13) eines zweiten Lagers (9) gelagert ist. Der Laufradblock (1) ist mit zumindest einer seiner Wandungen lösbar an einer Befestigungsvorrichtung (14) befesflgt.

## Beschreibung

Die Erfindung betrifft einen Laufradblock für Fahrwerke, der ein auf wenigstens einer Seite offenes Blechgehäuse aufweist. Des Weiteren wird ein Verfahren vorgeschlagen, mittels dem ein an einer Befestigungsvorrichtung befestigter Laufradblock aus Laufradblockteilen reversibel montiert werden kann.

Ein Laufradblock geht beispielsweise aus der DE 43 16 201 A1 hervor. Dieser Laufradblock weist ein Gehäuse aus zwei Gehäusehälften auf, die miteinander lösbar verbunden sind. Jede Gehäusehälfte dieses Laufradblocks weist einen nach innen weisenden Vorsprung auf, der mit einem entsprechenden Lagersitz versehen ist, so dass Lager des Laufradblocks zur Lagerung des Laufrads abgestützt werden können. Das in dem beschriebenen Laufradblock eingebaute Laufrad weist hierbei eine Nabe auf, an deren Ausläufer ebenfalls Sitzflächen ausgebildet sind zum Abstützen der Lager in axialer Richtung. Eine Lagerung des Laufrads erfolgt in diesem Laufradblock mit den Innenringen der Lager.

Der Erfindung liegt die Aufgabe zu Grunde, einen Laufradblock zur Verfügung zu stellen, bei dem einerseits Laufradblockbauteile wie beispielsweise das Laufrad und/oder das Lager ohne weiteres ausgewechselt werden können, um eine Wartung der Laufradblockbauteile vorzunehmen oder um einen Austausch der Laufradblockbauteile mit entsprechenden Ersatzteilen zu ermöglichen. Weiterhin liegt dieser Erfindung die Aufgabe zu Grunde, eine Konstruktion eines Laufradblocks zu entwickeln, die eine kostengünstigere Herstellung ermöglicht.

Die Aufgabe wird mit einem Laufradblock mit den Merkmalen des Anspruchs 1 sowie mit einem Verfahren mit den Merkmalen des Anspruchs 13 gelöst. Weitere vorteilhafte Ausgestaltungen und Weiterbildungen gehen aus der nachfolgenden Beschreibung hervor. Ein oder mehrere Merkmale aus den Ansprüchen, der Beschreibung wie auch den Figuren können mit ein oder mehreren anderen Merkmalen daraus zu weiteren Ausgestaltungen der Erfindung verknüpft werden. Insbesondere können auch ein oder mehrere Merkmale aus den unabhängigen Ansprüchen durch ein oder mehrere andere Merkmale ersetzt werden. Der vorgeschlagene Gegenstand ist nur als Entwurf zur Formulierung der Erfindung aufzufassen, ohne diesen aber zu beschränken.

Es wird ein Laufradblock vorgeschlagen. Dieser Laufradblock umfasst ein wenigstens zu einer Seite offenes Blechgehäuse, welches zumindest ein erstes Gehäuseteil mit einer ersten Stirnkante,und ein zweites Gehäuseteil mit einer zweiten Stirnkante aufweist. Im zusammengesetzten Zustand sind die Stirnkanten des Laufradblocks aneinanderliegend positioniert. Weiterhin weist der Laufradblock eine Radachse mit einer Radachsenmanteloberfläche auf. An einer ersten Stirnwandung des ersten Gehäuseteils ist ein erstes Radachsenloch angeordnet, so wie an einer zweiten Stirnwandung des zweiten Gehäuseteils ein zweites Radachsenloch angeordnet ist.

Das erste Radachsenloch und das zweite Radachsenloch der Stirnwandungen des Laufradblocks sind zueinander zentriert ausgerichtet zur Aufnahme und zur radialen Positionierung der Radachse relativ zum Laufradblock. Weiterhin weist der Laufradblock ein erstes Lager mit einem ersten Innenring und einem ersten Außenring sowie ein zweites Lager mit einem zweiten Innenring und einem zweiten Außenring auf. Das erste Lager ist hierbei weniger weit von der ersten Stirnwandung beabstandet als das das zweite Lager und vice versa. Weiterhin weist der Laufradblock ein Laufrad mit einer Rotationsachse auf, welches mit dem ersten Lager und dem zweiten Lager gelagert ist. Die Lagerung des Laufrads erfolgt mit dem ersten Außenring des ersten Lagers und mit dem zweiten Außenring des zweiten Lagers. Der Laufradblock ist hierbei mit zumindest einer seiner Wandungen reversibel lösbar an einer Befestigungsvorrichtung befestigt.

Für die Herstellung der Gehäuseteile können beispielsweise Stahlblech und/oder rostfreie Bleche, wie beispielsweise CrNi-Bleche, vorgesehen sein. Weiterhin können Bleche aus Leichtmetall oder Leichtmetalllegierungen vorgesehen sein, woraus sich vor allem der Vorteil einer Gewichtsersparnis ergibt. Weiterhin kann vorgesehen sein, dass die Gehäuseteile aus Faserverbundwerkstoffen hergestellt sind. Ein Vorteil von aus Faserverbundwerkstoffen hergestellten Laufradblöcken ist die Möglichkeit zur Kombination vorteilhafter Werkstoffeigenschaften. So ist es beispielsweise möglich, Gehäuseteile mit geringem Gewicht und hoher Festigkeit herzustellen.

Vorteil einer Herstellung der Gehäuseteile aus Blech ist die Ermöglichung einer Fertigung, welche, beispielsweise im Gegensatz zu einer Herstellung aus Gusseisen, auch bereits bei vergleichsweise kleinen Stückzahlen wirtschaftlich betrieben werden kann. Die Konstruktion des Laufradblocks als Laufradblock mit einem Blechgehäuse, das ein erstes und ein zweites Gehäuseteil aufweist, erlaubt hierbei beispielsweise eine vorteilhafte Fertigung der Gehäuseteile mittels Umformen von Blech.

Besonders vorteilhaft ist hierbei, dass bei einer Herstellung der Gehäuseteile aus Blech aufgrund der durchdachten Konstruktion des Laufradblocks und dem vorteilhaft konstruierten Zusammenwirken der Gehäuseteile mit den übrigen Bauteilen des Laufradblocks möglich ist, die Gehäuseteile mittels Abkantens eines Blechs zu formen. Hierdurch ist eine Herstellung der Gehäuseteile ohne eine Notwendigkeit einer Nutzung komplexer oder gar eigens herzustellender oder anzupassender Werkzeuge möglich.

Es kann jedoch auch vorgesehen sein, dass das erste Gehäuseteil und/oder das zweite Gehäuseteil des Laufradblocks aus Gusseisen hergestellt sind.

Ebenfalls können Ausgestaltungen eines Laufradblocks vorgesehen sein, in welchen das erste Gehäuseteil und/oder das zweite Gehäuseteil aus Stahlguss hergestellt sind.

Als erstes Lager und als zweites Lager können Wälzlager vorgesehen sein, bei denen der Innenring sowie der Außenring durch rollende Körper voneinander getrennt sind. Die Lager können hierbei als Fest- und/oder Loslager verwendet werden. Je nach Auslegung des Laufradblocks mit Hinblick auf mögliche und/oder vorgesehene Verwendungszwecke und den erwarteten Richtungen und Beträgen von das Laufrad belastenden Kräften kommen Radial- und/oder Axiallager als für die Lagerung des Laufrads verwendete Lager in Betracht. Hierbei ist beispielsweise die Verwendung von Kugellagern, Zylinderrollenlagern, Nadellagern, Kegelrollenlagern, Tonnenlagern oder Toroidalrollenlagern möglich. Beispielsweise kommen Rillenkugellager beispielsweise gemäß der Definition der DIN 625, Schrägkugellager beispielsweise gemäß der Definition der DIN 628, Schulterkugellager beispielsweise gemäß der Definition der DIN 615, Pendelkugellager beispielsweise gemäß der Definition der DIN 630, Zylinderrollenlager beispielsweise gemäß der Definition der DIN 5412, Kegelrollenlager beispielsweise gemäß der Definition der DIN 720 und/oder Tonnen- oder Pendelrollenlager beispielsweise gemäß der Definition der DIN 635 in Betracht. Insbesondere kann eine Verwendung von Tonnenrollenlagern, Pendelrollenlagern und/oder Nagellager beispielsweise gemäß der Definition der DIN 617 vorgesehen sein. In den Fällen, in denen eine Auslegung auch für eine hohe axiale Kraftbeaufschlagung vorgesehen ist, kann auch die Verwendung von Axiallagern, wie beispielsweise Axialrillenkugellagern beispielsweise gemäß der Definition der DIN 711, Axialzylinderrollenlagern beispielsweise gemäß der Definition der DIN 722 und/oder Axialpendelrollenlagern beispielsweise gemäß der Definition der DIN 728 vorteilhaft sein. In besonders bevorzugter Weise verfügt der Laufradblock jedoch über Kugellager oder Pendelrollenlager in der wie oben beschriebenen Bedeutung.

Vorteil der radialen Positionierung der Radachse mittels der Radachsenlöcher ist eine Aufnahme der radial auf das Laufrad einwirkenden Kräfte durch den Laufradblock, wobei der Begriff radial jeweils auf die Rotationsachse des Laufrads bezogen ist. Die Querschnittsfläche der Radachsenlöcher kann in beliebiger geeigneter Form ausgebildet sein, beispielsweise in quadratischer, rechteckiger oder vieleckiger Grundform, wobei die korrespondierende Querschnittsform des in die Radachsenlöcher einzuführenden Bereichs der Radachse dann korrespondierend ausgebildet sein muss. Um einen vereinfachten Fertigungsprozess und eine optimierte Kraftbeaufschlagung zu erreichen, ist in vielen Fällen jedoch eine runde Querschnittsfläche der Radachse an jeder Position ihrer axialen Erstreckung zweckmäßig, sodass auch die korrespondierenden Radachsenlöcher entsprechend in runder Querschnittsfläche ausgebildet sind.

In einer bevorzugten weiteren Ausgestaltung des Laufradblocks ist das Laufrad nabenlos und als Hohlrad ausgebildet. Das Kennzeichen des Laufrads als Hohlrad ist hierbei insbesondere dadurch gegeben, dass das Hohlrad entlang der gesamten Erstreckung der Radachse von der Radachse beabstandet ist. Ein Vorteil einer solchen Konstruktion des Laufrades, deren Voraussetzung die Lagerung des Laufrads mit den Außenringen der Lager ist, ist die Einsparung von für die Herstellung des Laufrads erforderlichem Material während der Fertigung. Neben der Materialersparnis ergibt sich beispielsweise noch der Vorteil, dass Standardrohrmaterial verwendet werden kann, so dass kostenintensive Fertigungsschritte teilweise entfallen können, und wenig Materialverluste bei der Bearbeitung anfallen.

In einer bevorzugten Ausgestaltung des Laufradblocks kann vorgesehen sein, dass die Lager des Laufradblocks austauschbar sind. Eine Austauschbarkeit ist vor allem dann gegeben, wenn die Gehäuseteile des Laufradblocks lösbar miteinander verbunden sind, sowie weiterhin auch sämtliche sonstigen Bauteile, welche zur Entfernung der Lager von dem montierten Laufradblock entfernt werden müssen, ebenfalls nicht stoffschlüssig mit einer anderen Komponente des Laufradblocks verbunden sind. Hierdurch ist es möglich, die Lager zu entfernen und durch Ersatzteile zu ersetzen. Weiterhin ist es möglich, auch das Laufrad zu entfernen, und durch ein Ersatzlaufrad zu ersetzen.

In einer weiteren Ausgestaltung weist die Radachse in einem außerhalb des Gehäuses befindlichen Bereich an der Seite des ersten Gehäuseteils zumindest eine erste Sicherungsausnehmung auf. Mittels der Sicherungsausnehmung ist zumindest ein erstes Sicherungselement positioniert. Weiterhin weist die Radachse innerhalb eines außerhalb des Gehäuses befindlichen Bereichs an der Seite des zweiten Gehäuseteils zumindest eine zweite Sicherungsausnehmung auf, mittels der zumindest ein zweites Sicherungselement positioniert ist. Das erste Sicherungselement wirkt hierbei mit der ersten Stirnwandung zusammen, während das zweite Sicherungselement mit der zweiten Stirnwandung zusammenwirkt, und durch das gleichzeitige Zusammenwirken der Sicherungselemente mit der ersten und der zweiten Stirnwandung ein axiales Zusammenhalten des Laufradblocks bewirkt wird. Bei der Sicherungsausnehmung kann es sich beispielsweise um eine die Radachse zumindest teilweise umlaufende Nut, bevorzugt um eine vollständige umlaufende Nut, handeln. In einer solchen umlaufenden Nut kann das Sicherungselement eingelassen und hierdurch axial positioniert werden. Das Sicherungselement kann beispielsweise ein Sicherungsring sein. Vorteil einer solchen Konstruktion ist, dass bei entsprechend durch die Sicherungselemente in Zusammenwirkung mit den Stirnwandungen bewirktem Kraftschluss eine kraft- und/oder formschlüssige Verbindung der Gehäuseteile des Laufradblocks bereits lediglich durch die an der Radachse angeordneten Sicherungselemente erbracht werden kann. Es kann somit in diesen Ausgestaltungen auf zusätzliche Verbindungselemente zur axialen kraftschlüssigen Verbindung der Gehäuseteile verzichtet werden.

Ein zusätzlicher Beitrag zur herausragenden Stabilität des beschriebenen Laufradblocks wird durch die konstruktive Ausführung der Anbringung der Anbauteile, insbesondere der Befestigungsvorrichtung, geleistet. Beispiele hierfür ist der weiter unten beschriebene Positionierbolzen, das weiter unten beschriebene Befestigungswangenverbindungselement oder der weiter unten beschriebene Träger.

In einer weiteren Ausgestaltung ist vorgesehen, dass die Radachse oder mit der Radachse verbundene Elemente Begrenzungsflächen aufweisen, deren Abstand voneinander derart bemessen ist, dass die Innenseite der Stirnwandungen der Gehäuseteile des Laufradblocks sich im zusammengebauten Zustand des Laufradblocks auf den Begrenzungsflächen abstützen. Die Begrenzungsflächen, welche an der Radachse angeordnet sind, können hierbei beispielsweise dadurch gebildet werden, dass der Durchmesser der Radachse innerhalb des Laufradblocks, das heißt zwischen den den Laufradblock begrenzenden Wandungen, zumindest in an den Stirnwandungen angrenzenden Bereichen entlang der radialen Erstreckung der Radachse zumindest teilweise größer ist als die radiale Erstreckung der Radachsenlöcher. Eine weitere Möglichkeit zur Bildung von Begrenzungsflächen zur Abstützung der Innenseiten der Stirnwandungen der Gehäuseteile ist eine geeignete Anordnung von mit der Radachse verbundenen Elementen, wobei die Elemente hierbei lösbar oder unlösbar mit der Radachse verbunden sein können. Als eine Möglichkeit zur Anbringung eines solchen Elementes können innerhalb von in der Radachse eingebrachten, die Radachse teilweise oder vollständig umlaufenden, Nuten angeordnete Sicherungsringe als Begrenzungsflächen dienen. Aber auch weitere, auch nur auf Bruchteilen des Umfangs der Radachse angeordneten Elemente können hierfür dienen, wie beispielsweise form- und/oder stoffflüssig mit der Radachse verbundene Metallplättchen. In solchen Fällen, in denen der Abstand der auf diese Weise erzeugten Begrenzungsflächen dem Abstand der Innenflächen der Stirnwandungen entspricht, oder diese geringfügig übersteigt und/oder unterschreitet, können die Stirnwandungen der Gehäuseteile sich auf diesen Begrenzungsflächen abstützen. Ein Vorteil eines solchen Abstützens der Stirnwandungen auf den Grenzflächen ist es, dass höhere Kräfte zur kraftschlüssigen Verbindung der Gehäuseteile aufgebracht werden können, ohne dass dies eine Verformung des Laufradblocks zur Folge hat. Hierdurch kann in der Folge die Stabilität des Laufradblocks verbessert werden. Zudem ist es vorteilhaft, dass bei Vorliegen von in dieser Weise beabstandeten Begrenzungsflächen bei gleichzeitiger kraftschlüssiger Verbindung von den Gehäuseteilen eine axiale Positionierung der Radachse bewirkt wird. In einer Ausgestaltung überschreitet die axiale Erstreckung der Radachse den Abstand der Außenflächen der Stirnwandungen der Gehäuseteile nicht und kann diese sogar unterschreiten. Vorteil einer solchen Ausgestaltung ist, dass eine platzsparende Konstruktion des Laufradblocks möglich ist, da keine über die Stirnwandungen der Gehäuseteile hinausragenden Bauteile vorhanden sein müssen.

Ein weiterer Vorteil der guten Stabilisierbarkeit der zu einem Blechgehäuse des Laufradblocks zusammengesetzten Gehäuseteile ist, dass die Nutzung von auch vergleichsweise dünnen Blechen zur Herstellung der Gehäuseteile möglich ist.

Beispielsweise kann vorgesehen sein, dass das Blechgehäuse ein Blech mit einer Blechdicke zwischen 3 und 12 mm, bevorzugt zwischen 4 und 8 mm, besonders bevorzugt zwischen 5 und 7 mm aufweist.

In einer weiteren Ausgestaltung des Laufradblocks weist das Laufrad zumindest eine zwischen dem ersten Lager und dem zweiten Lager angeordnete und zu der Rotationsachse des Laufrads hin gerichtete radiale Erhebung auf. Die radialen Begrenzungsflächen der radialen Erhebung bewirken in dieser Ausgestaltung eine axiale Positionierung des ersten Lagers und des zweiten Lagers jeweils in die von einem Lager zum anderen Lager weisende Richtung. Die axiale Positionierung der beiden Lager wird dadurch bewirkt, dass die radialen Begrenzungsflächen der radialen Erhebung als Sitzflächen für die Lager dienen. In einer Ausgestaltung des Laufradblocks ist zwischen dem ersten Lager und der ersten Stirnwandung zumindest ein erstes Halteelement und zwischen dem zweiten Lager und der zweiten Stirnwandung zumindest ein zweites Halteelement angeordnet. Das erste Halteelement bewirkt hierbei eine axiale Positionierung des ersten Lagers in die vom zweiten Lager fortweisende Richtung. Das zweite Halteelement bewirkt eine axiale Positionierung des zweiten Lagers in die vom ersten Lager fortweisende Richtung. Der Begriff Haltelement bezeichnet hierbei ein in axialer Richtung des Hohlrads positioniertes Element, welches hierdurch eine axiale Positionierung eines weiteren Bauteils, wie beispielsweise eines Lagers, bewirken kann. In einer Ausgestaltung ist es beispielsweise möglich, dass es sich bei dem Haltelement um einen Sicherungsring handelt, der in einer radialen Vertiefung, wie beispielsweise einer Nut, bevorzugt einer umlaufenden Nut, angeordnet ist. Beispielsweise ist es möglich, hierfür Sicherungsringe beispielsweise gemäß der Norm DIN 471 und/oder beispielsweise DIN 472 zu verwenden. Der Begriff der axialen Positionierung kennzeichnet hierbei eine dahingehende axiale Positionierung eines Lagers, dass die Positionierung wenigstens mittelbar mittels des Haltelements bewirkt wird, jedoch nicht notwendigerweise ein unmittelbarer Formschluss zwischen dem Halteelement und dem Lager vorliegen muss. Vielmehr ist es ebenfalls möglich, dass zwischen dem Halteelement und dem Lager ein oder mehrere weitere Elemente angeordnet sind, welche als Distanzhalter dienen. Beispielsweise kann hierfür ein, zum Beispiel aus Metall hergestellter, Distanzring oder eine Distanzhülse vorgesehen sein. Aber auch die Verwendung von nicht rotationssymmetrischen oder nicht im Wesentlichen rotationssymmetrischen Elementen ist möglich.

Für die Herstellung des Laufrads ist beispielsweise die Verwendung von Gusseisen vorgesehen. Aufgrund der guten mechanischen Eigenschaft kommt hierbei insbesondere Sphäroguss gemäß der Bezeichnung GJS nach der europäischen Norm EN 1563 in Frage. Abhängig von den jeweiligen Anforderungen ist jedoch auch die Verwendung von weiteren Gusseisen möglich, wie beispielsweise Gusseisen mit Lamellengraphit, Temperguss, schwarzer Temperguss, oder auch Vermikulargraphitguss gemäß der ISO-Norm 16112 GJV. In weiteren Entwicklungen kann auch die Verwendung von einem Polyamid oder einem Polyurethan vorgesehen sein. Aus solchen Materialien hergestellte Laufräder können optional mit Ringen, beispielsweise aus einem Stahl, zur Verstärkung ergänzt werden.

Weiterhin möglich ist die Verwendung von Stahl für die Herstellung des Laufrads, wobei je nach Anforderungsprofil die Auswahl des verwendeten Stahls unterschiedlich ausfallen kann. Für Spezialanwendungen ist weiterhin möglich, Leichtmetalllegierungen, wie insbesondere Aluminium-Bronze-Legierungen, zu verwenden. Die Verwendung beispielsweise von Aluminium-Bronze-Legierungen ermöglicht nicht nur die Herstellung von Laufrädern, welche verschleißfest sowie beständig gegen Korrosion, Verzunderung, Erosion und/oder Gravitation sind, insbesondere würde außerdem eine Verwendung beispielsweise von einer Aluminium-Bronze-Legierung eine weitgehend funkenfreie Bearbeitung und/oder Verwendung des Laufrades ermöglichen, so dass insbesondere eine Verwendung des Laufradblocks in diesbezüglich sicherheitssensitiven Bereichen möglich würde. Dies kann insbesondere von besonderem Belang sein, wenn Sicherheitsrichtlinien, wie beispielsweise die ATEX-Leitlinien der Europäischen Union entsprechende Erfordernisse begründen.

In einer weiteren Ausgestaltung ist es vorgesehen, dass die Radachse zumindest eine Schmiermittelzuführungsleitung aufweist, welche ausgehend von einer Radachsenstirnseite zu der Radachsenmanteloberfläche verläuft. Vorteil einer solchen Schmiermittelzuführungsleitung ist es, dass ein Einführen von Schmiermittel in das Innere des Laufradblocks ermöglicht wird, ohne eine vorherige Demontage des Laufradblocks vornehmen zu müssen. Die Schmiermittelzuführungsleitung kann hierbei als Tunnel ausgeführt sein, welcher in einem beliebigen Verlauf von einer Stirnseite der Radachse hin zu der Manteloberfläche der Radachse verläuft. Aus Gründen einer möglichst einfachen Fertigung kann jedoch insbesondere vorgesehen sein, dass die Schmiermittelzuführungsleitung sich aus einer Kombination von zwei Bohrungen zusammensetzt, wobei die erste Bohrung von einer der Radachsenstirnseiten in axialer Richtung der Radachse verläuft, und diese Bohrung zumindest einen gemeinsamen Treffpunkt aufweist mit einer weiteren, von der Radachsenmanteloberfläche in radialer Richtung in das Innere der Radachse verlaufenden Bohrung. Hinsichtlich einer Funktion der Schmiermittelzuführungsleitung sind jedoch sowohl der Verlauf der Schmiermittelzuführungsleitung als auch der Querschnitt der Schmiermittelmittelzuführungsleitung beliebig wählbar, wobei auch veränderliche Querschnitte möglich sind. Für eine effiziente Schmierung der Lager ist es jedoch erforderlich, dass eine Mündung der Schmiermittelzuführungsleitung im Bereich zwischen dem ersten und dem zweiten Lager angeordnet ist.

In einer weiteren Ausgestaltung ist vorgesehen, dass das erste Gehäuseteil und das zweite Gehäuseteil formschlüssig reversibel lösbar miteinander verbunden sind. Die erste Stirnkante des ersten Gehäuseteils und die zweite Stirnkante des zweiten Gehäuseteils sind hierfür jeweils derart ausgebildet, dass die beiden Stirnkanten miteinander korrespondierend einen Formschluss aufweisen können. Dies kann beispielsweise dadurch bewirkt sein, dass die erste Stirnkante eine Nut aufweist, die in eine korrespondierende in der zweiten Stirnkante vorhandenen Feder einführbar ist. Weiterhin ist es möglich, dass die erste Stirnkante Aussparungen und/oder die mit entsprechenden an der jeweils anderen Stirnwandung des anderen Gehäuseteils angebrachten Vorsprüngen korrespondiert. Die formschlüssige reversibel lösbare Verbindung des ersten Gehäuseteils und des zweiten Gehäuseteils kann hierbei durch eine kraftschlüssige ebenfalls reversibel lösbare Verbindung ergänzt werden, beispielsweise durch Verbindungselemente wie beispielsweise Spannschrauben, welche durch entsprechende Spannschraubenlöcher ausgehend von der ersten Stirnkante des ersten Gehäuseteils zu der zweiten Stirnkante des zweiten Gehäuseteils verlaufen und mit beiden Gehäuseteilen zusammenwirkend eine kraftschlüssige Verbindung bewirken. Eine weitere Möglichkeit zur kraftschlüssigen Verbindung ist die bereits oben beschriebene Möglichkeit zur kraftschlüssigen Verbindung mittels mit den Stirnwandungen zusammenwirkender Sicherungselemente, welche in axialer Richtung der Radachse durch die Radachse positioniert sind.

Eine weitere Ausgestaltung der Erfindung sieht vor, dass die Form des ersten Gehäuseteils und die Form des zweiten Gehäuseteils identisch sind. Dies kann beispielsweise in der oben beschriebenen Ausgestaltung der Gehäusehälften mit einander korrespondierenden Vorsprüngen und Aussparungen erreicht werden. Ein Vorteil identischer Formen der Gehäusehälften sind reduzierte Fertigungskosten, da die Anzahl der herzustellenden Gehäuseteile einer Form sich hierdurch wenigstens verdoppelt, und beispielsweise in der Ausgestaltung der Gehäuseteile als Gehäusehälften nur noch Gehäuseteile einer Form hergestellt werden brauchen.

In einer weiteren Ausgestaltung der Erfindung ist die Befestigungsvorrichtung als Befestigungswandungspaar ausgestaltet, welches eine erste Befestigungswandung mit einer ersten Außenfläche und eine zweite Befestigungswandung mit einer zweiten Außenfläche aufweist. In dieser Ausgestaltung umgegeben die Außenflächen den Laufradblock in zu den Stirnwandungen des Laufradblocks paralleler Orientierung. Der Laufradblock ist in dieser Ausgestaltung der Erfindung an zumindest einem Tragebolzen aufgehängt, der durch jeweils paarweise zueinander zentrierte Tragebolzenlöcher in den Stirnwandungen des Laufradblocks und den Befestigungswandungen des Befestigungswandungspaars relativ zu der Befestigungsvorrichtung und zum Laufradblock radial positioniert ist. Weiterhin ist der Laufradblock an dem zumindest einen Tragebolzen durch mit den Außenflächen des Befestigungswandungspaars zusammenwirkende Tragebolzensicherungselemente relativ zum Befestigungswandungspaar axial positioniert. Hierbei ist zumindest ein Positionierbolzen durch in den Stirnwandungen des Laufradblocks befindliche Positionierbolzenlöcher relativ zum Laufradblock radial positioniert. Die Begriffe des Tragebolzens und des Positionierbolzens sind hierbei dahingehend zu verstehen, dass es sich um Bauteile handelt, deren Längsachse im eingebauten Zustand parallel zur Rotationsachse des Laufrads verläuft. In bevorzugten Ausgestaltungen handelt es sich bei dem Tragebolzen und bei dem Positionierbolzen jeweils um Bauteile mit im Wesentlichen kreiszylindrischen Mantel. Aber auch andere als runde Querschnittsformen sind möglich, beispielsweise kann der Tragebolzen und/oder der Positionierbolzen einen quadratischen, rechteckigen oder vieleckigen Querschnitt aufweisen. Der Begriff der axialen Positionierung bezeichnet eine Positionierung entlang einer Längsachse, während der Begriff der radialen Positionierung eine Positionierung senkrecht zu einer oder mehreren Längsachsen bezeichnet.

In einer Ausgestaltung der Erfindung ist der Positionierbolzen mittels jeweils zumindest eines auf jeder Seite des Befestigungswandungspaars durch die jeweilige Befestigungswandung in den Positionierbolzen eingebrachten axialen Positionierbolzenverbindungselements relativ zum Befestigungswandungspaar axial positioniert. Der Begriff des axialen Positionierbolzenverbindungselements bezeichnet hierbei ein Verbindungselement, mit dem der Bolzen, bevorzugt reversibel lösbar, in eine zu der jeweiligen Befestigungswandung senkrechte Richtung positioniert werden kann. Als Positionierbolzenverbindungselement können beispielsweise Schrauben verwendet werden.

In einer Ausgestaltung der Erfindung weist der Positionierbolzen zumindest eine Positionierbolzenkrempe auf, die in Zusammenhang mit einem lösbar oder unlösbar an dem Positionierbolzen angeordneten Positionierbolzensicherungselement eine axiale Positionierung des Positionierbolzens relativ zum Laufradblock bewirkt. Die Positionierbolzenkrempe bewirkt eine axiale Positionierung des Positionierbolzens in eine in den Laufradblock weisende Richtung dadurch, dass sie in einer zu den Stirnwandungen des Laufradblocks parallelen Ebene die Querschnittsfläche des Positionierbolzens vergrößert, und dieser dann nicht mehr durch das zur Einführung des Positionierbolzen an der entsprechenden Stirnwandung angeordnete Loch durchführbar ist. Die Positionierbolzenkrempe kann hierbei lösbar oder unlösbar an dem Positionierbolzen angeordnet sein, beispielsweise durch stoffschlüssige Verbindung mit diesem verbunden sein, oder durch kraft und/oder formschlüssige Verbindung, beispielsweise einer Schraubverbindung, mit dem Positionierbolzen verbunden sein. Die Positionierbolzenkrempe weist hierbei eine Drehsicherungsausnehmung auf, die ein korrespondierendes Drehsicherungsgegenelement in formschlüssiger Verbindung zumindest teilweise umgreift zur Verhinderung eines Verdrehens des Positionierbolzens um dessen Rotationsachse. Die Drehsicherungsausnehmung kann hierbei eine Ausnehmung beliebiger Form, sein, die beispielsweise aus einem Randbereich der Positionierbolzenkrempe entnommen ist. Die Drehsicherungsausnehmung kann aber beispielsweise auch als Loch mit beliebigem Querschnitt ausgebildet sein, das mit einem Drehsicherungsgegenelement in Form eines axialen Verbindungselements zusammenwirkt, wie beispielsweise einer Schraube oder einem Stift.

Neben der axialen Positionierung bewirkt der Positionierbolzen einen Beitrag zur Stabilität des Laufradblocks wie insbesondere seiner Steifheit und seiner Widerstandsfähigkeit gegenüber auf den Laufradblock einwirkender Kräfte. Vor allem durch die Zusammenwirkung der Positionierbolzenkrempe und dem Positionierbolzensicherungselement mit den Drehsicherungsgegenelementen und den Stirnwandungen des Laufradblockgehäuses wird eine gegenüber extern wirkenden Kraftbelastungen wie beispielsweise auch Scherkräften wirkungsvolle Widerstandsfähigkeit erreicht.

In einer weiteren Ausgestaltung ist die Befestigungsvorrichtung als Befestigungswange ausgestaltet, an welcher der Laufradblock mit zumindest einem axialen Befestigungswangenverbindungselement zumindest kraftschlüssig verbunden ist. Als Befestigungswangenverbindungselement ist beispielsweise die Verwendung von Schrauben möglich, wobei eine Schraubverbindung durch nur eine der Stirnwandungen des Laufradblocks oder auch durch beide Stirnwandungen des Laufradblocks erfolgen kann. Eine Schraubverbindung durch beide Stirnwandungen des Laufradblocks führt beispielsweise zu dem Vorteil, dass gleichzeitig mit der Befestigung des Laufradblocks eine Stabilisierung des Laufradblocks erfolgt. Zur weiteren Verbesserung der Stabilisierung des Laufradblocks kann vorgesehen sein, dass die Schraubverbindung durch eine zwischen den Stirnwandungen des Laufradblocks eingeführte Hülse oder Passmuffe erfolgt. Besonders vorteilhaft für die Stabilisierung des Laufradblocks mittels einer solchen Passmuffe, durch welche die jeweiligen Befestigungswangenverbindungselemente geführt sind, ist die Anordnung von in einer zu den Stirnwandungen des Laufradblocks paralleler Ebene liegenden Stützflächen der Passmuffe, auf denen sich die Stirnwandungen unter Krafteinwirkung der Befestigungswangenverbindungselemente abstützen können und hierdurch zumindest in axialer Richtung stabilisiert werden. Durch Abstützen der Stirnwandungen auf den Stützflächen kann, wenn die Stützflächen nicht zu klein sind, aber gleichzeitig auch eine Stabilisierung des Laufradblocks gegen parallel zu den Stirnwandungen wirkende Scherkräfte erreicht werden.

In der Ausgestaltung des Laufradblocks als an einer Befestigungswange angeordnetem Laufradblock ergibt sich ebenfalls der Vorteil der hohen Stabilität des Laufradblockgehäuses. Das hohe Maß an Stabilität des Laufradblockgehäuses ergibt sich in dieser Ausgestaltung insbesondere aus der Gegenkraft der Passmuffe und/oder Hülse, welche von dem Inneren des Laufradblockgehäuses auf die Stirnwandungen ausgeübt wird.

In einer weiteren Ausgestaltung der Erfindung ist die Befestigungsvorrichtung als Träger ausgebildet. Der Laufradblock ist in dieser Ausgestaltung mit zumindest einer Kopfwandung mittels zumindest einem Befestigungswangenverbindungselement zumindest kraftschlüssig befestigt. Bei dem Träger kann es sich beispielsweise um einen Profilstahl, in beispielsweise einem I-Profil, einem U-Profil, einem T-Profil, einem TH-Profil, einem Z-Profil oder einem L-Profil, aus zumindest einem Flansch und zumindest einem Steg handeln, wobei in dieser Ausgestaltung beispielsweise die Kopfwandung des Laufradblocks an dem Flansch befestigt wird.

Die Anbauteile, wie beispielsweise die Befestigungsvorrichtung, bewirkt hierbei einen Beitrag zu der Stabilität des Laufradblocks. Die vorgesehene Konstruktionsweise zeichnet sich somit durch eine beträchtliche Stabilität und Belastbarkeit aus, so dass der Laufradblock auch großen Lasten und Kräften widerstehen kann.

Gemäß einem weiteren Gedanken der Erfindung wird ein Verfahren zur reversiblen Montage eines an einer Befestigungsvorrichtung befestigten Laufradblocks vorgeschlagen. Während dieses Verfahrens wird eine Radachse durch ein in einer ersten Stirnwandung eines ersten Gehäuseteils angeordnetes Radachsenloch radial positioniert. Weiterhin werden Laufradblockbauteile in von dem ersten Gehäuseteil fortweisender Richtung einer vorgesehenen Anordnungsreihenfolge entsprechend an der Radachse anliegend und/oder an zu der Radachse konzentrischen Bauteilen anliegend die Radachse umgrenzend angeordnet. Das Verfahren eines Zusammensetzens des Laufradblocks wird vervollständigt mit dem Aufsetzen eines zumindest zweiten Gehäuseteils mit einem in einer zweiten Stirnwandung angeordneten Radachsenloch, wobei die beiden Radachsenlöcher die radiale Positionierung der Radachse bewirken. Für eine kraftschlüssige Verbindung der Gehäusehälften kann anschließend noch ein Einführen von entsprechenden Verbindungselementen erfolgen. Der Begriff Laufradblockbauteil umfasst hierbei jedes Bauteil, aus welchem sich der Laufradblock zusammensetzt. Vorteil des Verfahrens ist es, dass der Laufradblock aus seinen Einzelteilen montiert und demontiert werden kann, wobei bei nicht stoffschlüssiger Verbindung der Gehäuseteile diese Montage und Demontage reversibel ist. Das vorgeschlagene Verfahren der Montage des Laufradblocks durch die sequentielle Anordnung von Laufradblockbauteilen um eine radial positionierte Radachse hat hierbei den Vorteil, dass ein vereinfachter Zusammenbau des Laufradblocks möglich ist. Die nach einem Zusammenbau mögliche reversible Demontage und Montage hat zum Vorteil, dass Laufradblockbauteile, wie beispielsweise das Laufrad oder die Lager, nach einem Verschleiß der Laufradblockbauteile ausgewechselt werden können.

Es kann hierbei insbesondere vorgesehen sein, dass die reversible Montage eines an einer Befestigungsvorrichtung befestigten Laufradblocks als Montage eines Laufradblocks, umfassend ein wenigstens zu einer Seite offenes Blechgehäuse, vorgesehen ist.

In einer Ausgestaltung des Verfahrens werden Sicherungselemente an der Radachse in dafür vorgesehenen Sicherungsausnehmungen zwischen einem die Radachse umgrenzenden ersten Lager und der ersten Stirnwandung des ersten Gehäuseteils sowie zwischen einem die Radachse umgrenzenden zweiten Lager und einer zweiten

Stirnwandung eines zweiten Gehäuseteils angeordnet für eine axiale Positionierung des ersten Lagers und des zweiten Lagers. Die Sicherungselemente müssen hierbei jedoch nicht unmittelbar an den Lagern anliegen, sondern es können noch weitere Laufradblockbauteile zwischen den Lagern und den Sicherungselementen angeordnet sein, wie beispielsweise Distanzringe, Distanzhülsen und/oder Dichtelemente. Hierdurch wird sichergestellt, dass, beispielsweise je nach Art des verwendeten Lagers, eine geeignete Art der axialen Positionierung der Lager gefunden werden kann.

In einer Ausgestaltung des Verfahrens werden außerhalb des Laufradblocks an den Außenflächen der Stirnwandungen anliegend Sicherungselemente an der Radachse in dafür vorgesehenen Sicherungsausnehmungen angeordnet. Hierdurch wird ein Zusammenhalt der Gehäuseteile durch eine reversibel lösbare, und zumindest kraftschlüssige Verbindung der Sicherungselemente mit den Außenseiten der Stirnwandungen bewirkt.

In einer weiteren Ausgestaltung des Verfahrens wird ein Tragebolzen durch in den Wandungen eines den Laufradblock von außen U-förmig umfassenden Befestigungswandungspaars befindliche Tragebolzenlöcher geschoben. Das Befestigungswandungspaar weist hierbei zumindest eine erste Befestigungswandung und eine zweite Befestigungswandung auf. In einer vorteilhaften Ausgestaltung sind die beiden Befestigungswandungen hierbei parallel zu den Stirnwandungen der Gehäuseteile des Laufradblocks angeordnet. Nach dem Schieben des Tragebolzens durch die Tragebolzenlöcher wird der Tragebolzen durch von außen an den Befestigungswandungen kraftschlüssig reversibel lösbar befestigte Tragebolzensicherungselemente axial positioniert. Bei den Tragebolzensicherungselementen kann es sich beispielsweise durch in entsprechende in dem Tragebolzen angeordnete Ausnehmungen eingebrachte Elemente handeln. Die Ausnehmungen können hierbei beispielsweise als zu einer Ebene der entsprechenden Befestigungswandung parallele Richtung eingebrachte Nuten, vorzugsweise vollständig umlaufende Nuten, ausgebildet sein. In solche können dann die Tragebolzensicherungselemente eingebracht werden, die beispielsweise als Sicherungsringe ausgebildet sein können.

In einer weiteren Ausgestaltung des Verfahrens erfolgt die axiale Positionierung des Laufradblocks mittels zumindest eines an jeder Seite des Befestigungswandungspaars angeordnetes axialen Positionierbolzenverbindungselements. Die Positionierbolzenverbindungselemente, die bevorzugt als Schraube ausgebildet sein können, werden hierbei mit einem Positionierbolzen verbunden und bis zu einem Zusammenwirken mit den Befestigungswandungen in den Positionierbolzen eingeführt. Durch Verringerung der Einführtiefe eines der Positionierbolzenverbindungselemente und korrespondierende Erhöhung der Einführtiefe des jeweils anderen Positionierbolzenverbindungselements wird eine relative Verschiebung des Laufradblocks bewirkt. Hierdurch wird der Vorteil erreicht, dass eine Positionierung eines bereits an der Befestigungsvorrichtung befestigten Laufradblocks ermöglicht wird. Weiterhin bietet dieses Verfahren den Vorteil, dass eine Befestigung des Laufradblocks an Befestigungswandungspaaren mit verschiedenen Abständen zwischen den Befestigungswandungen möglich ist.

Jede der genannten Ausgestaltungen soll derart möglich sein, dass die erste Gehäusehälfte und/oder die zweite Gehäusehälfte aus einem Blech, einem Gusseisen oder einem Stahlguss hergestellt ist und jede dieser Varianten soll auch als solche separat beansprucht werden können.

Im Folgenden werden weitere Ausgestaltungen der Erfindung mit Bezugnahme zu den Figuren im Detail näher erläutert. Die Figuren und begleitenden Beschreibungen der resultierenden Merkmale sind nicht beschränkend auf die jeweiligen Ausgestaltungen, dienen jedoch zur Illustrierung einer beispielhaften Ausgestaltung. Weiterhin können die jeweiligen Merkmale untereinander wie auch mit Merkmalen der obigen Beschreibung genutzt werden für mögliche weitere Entwicklungen und Verbesserungen der Erfindung, speziell bei zusätzlichen Ausgestaltungen, die nicht in näheren Details hier dargestellt sind.

Die Figuren zeigen nachfolgend:
- Fig. 1a: eine Ausgestaltung eines Laufradblocks in Vorderansicht im Schnitt,
- Fig. 1b: eine Seitenansicht des Laufradblocks der Fig. 1a,
- Fig. 1c: eine Draufsicht des Laufradblocks der Fig. 1a,
- Fig. 1d: eine Vorderansicht des Laufradblocks der Fig. 1a,
- Fig. 2a: eine weitere Ausgestaltung eines Laufradblocks in Vorderansicht im Schnitt,
- Fig. 2b: eine weitere Ausgestaltung eines Laufradblocks in Vorderansicht im Schnitt,
- Fig. 2c: eine weitere Ausgestaltung eines Laufradblocks in Vorderansicht im Schnitt,
- Fig. 3a: eine weitere Ausgestaltung eines Laufradblocks in Vorderansicht im Schnitt,
- Fig. 3b: eine weitere Ausgestaltung eines Laufradblocks in Vorderansicht im Schnitt,
- Fig. 4a: eine weitere Ausgestaltung eines Laufradblocks in Vorderansicht im Schnitt,
- Fig. 4b: eine Seitenansicht des Laufradblocks der Fig. 4a,
- Fig. 4c: eine Draufsicht des Laufradblock der Fig. 4a,
- Fig. 4d: eine Vorderansicht des Laufradblocks der Fig. 4a,
- Fig. 5a: eine weitere Ausgestaltung eines Laufradblocks als an einem Tragebolzen angeordneten Laufradblock, in Vorderansicht im Schnitt,
- Fig 5b: eine Ansicht des in Fig. 5a gezeigten Laufradblocks gemäß der Pfeile A und B,
- Fig. 6: eine weitere Ausgestaltung eines Laufradblocks als an einer Befestigungswange angeordneter Laufradblock, in Vorderansicht im Schnitt,
- Fig. 7: eine weitere Ausgestaltung eines Laufradblocks als an einem Träger im Kopfanschluss angeordneter Laufradblock, in Vorderansicht im Schnitt.

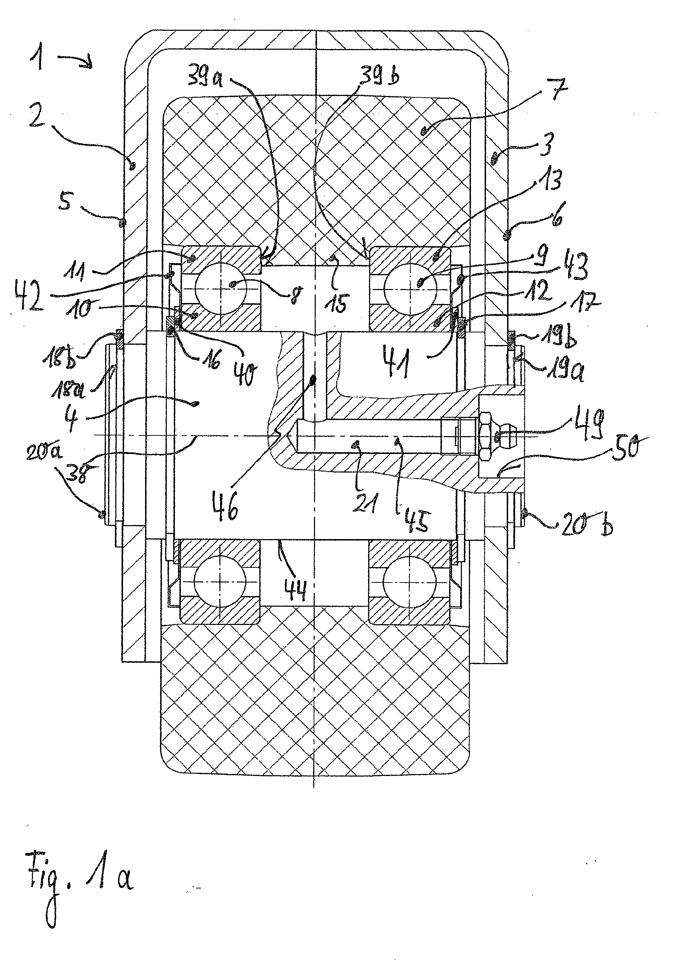

Fig. 1a ist eine Ausgestaltung eines Laufradblocks 1 zu entnehmen. Die in Fig. 1a gezeigte Ausgestaltung des Laufradblocks weist ein Blechgehäuse auf, welches aus einem ersten Gehäuseteil 2 sowie einem zweiten Gehäuseteil 3 zusammengesetzt ist. Die Gehäuseteile 2, 3 sind in der gezeigten Ausgestaltung jeweils als erste Gehäusehälfte mit einer ersten Stirnwandung 5 und als zweite Gehäusehälfte mit einer zweiten Stirnwandung 6 ausgebildet. Die erste Stirnwandung 5 und die zweite Stirnwandung 6 weisen jeweils ein Radachsenloch auf. Die Radachsenlöcher bewirken eine radiale Positionierung einer Radachse 4 mit einer Radachsenmanteloberfläche 44, die in Fig. 1a rotationssymmetrisch ausgebildet ist. Im Inneren des Blechgehäuses weist die Radachse 4 in der gezeigten Ausgestaltung entlang ihrer gesamten im Inneren des Blechgehäuses befindlichen axialen Erstreckung einen Durchmesser auf, welcher größer ist als der Durchmesser beider der jeweils in jeder der ersten Stirnwandung 5 und der zweiten Stirnwandung 6 befindlichen als kreisrunde Löcher ausgebildeten zur Aufnahme der Radachse bestimmten Ausnehmungen, dem ersten Radachsenloch und dem zweiten Radachsenloch. Durch die unmittelbar an der ersten Stirnwandung 5 und der zweiten Stirnwandung 6 angrenzenden Bereiche der Radachse mit gegenüber den Durchmessern des ersten Radachsenlochs und des zweiten Radachsenloch vergrößertem Durchmesser ergeben sich sowohl an der ersten Stirnwandung 5 als auch an der zweiten Stirnwandung 6 unmittelbar anliegende Begrenzungsflächen, die als Sitzflächen dienen, auf denen die erste Stirnwandung 5 und die zweite Stirnwandung 6 aufsitzen. Ein erstes Lager 8 und ein zweites Lager 9 umgreifen die Radachse 4. Die Lager sind hierbei in der gezeigten Ausgestaltung als Kugellager ausgebildet. Das erste Lager 8 weist einen ersten Innenring 10 und einen ersten Außenring 11 auf, das zweite Lager weist einen zweiten Innenring 12 und einen zweiten Außenring 13 auf. Mittels des ersten Außenrings 11 des ersten Lagers 8 und des zweiten Außenrings 13 des zweiten Lagers 9 wird ein Laufrad 7 mit einer Rotationsachse 38 gelagert, welches in Fig. 1a als Hohlrad ausgestaltet ist und an den Außenflächen der Außenringe 11, 13 anliegt. Das Laufrad 7 weist eine radiale Erhebung 15 auf, welche sich zwischen dem ersten Lager 8 und dem zweiten Lager 9 in Richtung der Rotationsachse 38 des Laufrads 7 erhebt, wobei die Erhebung in der gezeigten Ausgestaltung kleiner als die radiale Erstreckung der Innenflächen der Außenringe 11 und 13 der Lager 8 und 9 bemessen ist. Die Erhebungen weisen dadurch Begrenzungsflächen 39a, 39b auf, die als Sitzfläche für das erste Lager 8 und zweite Lager 9 dienen, und hierdurch die axiale Positionierung des ersten Lagers 8 in die von diesem zum zweiten Lager 9 weisende Richtung sowie die axiale Positionierung des zweiten Lagers 9 in die zum ersten Lager 8 weisende Richtung bewirken. In die von dem zweiten Lager 9 wegweisende Richtung wird die axiale Positionierung des ersten Lagers 8 durch ein erstes Halteelement 16 bewirkt, das in der gezeigten Ausgestaltung als Sicherungsring ausgebildet ist. In die vom ersten Lager 8 wegweisende Richtung wird die axiale Positionierung des zweiten Lagers 9 durch ein zweites Halteelement 17 bewirkt, das in der gezeigten Ausgestaltung als Sicherungsring ausgebildet ist. In der gezeigten Ausgestaltung ist zudem zwischen dem ersten Halteelement 16 und dem ersten Lager 8 ein erster Distanzring 40 angeordnet. Ein zweiter Distanzring 41 ist zwischen dem zweiten Halteelement 17 und dem zweiten Lager 9 angeordnet. Zur Abdichtung der beiden Lager 8 und 9 von dem übrigen Innenraum des Laufradblocks in die jeweils vom anderen Lager wegweisende Richtung ist sowohl zwischen dem ersten Lager 8 und dem ersten Distanzring 40 ein erstes Dichtungselement 42 als auch zwischen dem zweiten Lager 9 und dem zweiten Distanzring 41 ein zweites Dichtungselement 43 angeordnet. Weiterhin geht aus Fig. 1a hervor, dass ausgehend von einer Radachsenstirnseite 20b eine Schmiermittelzuführungsleitung 21 hin zu der Radachsenmanteloberfläche 44 verläuft. Die Schmiermittelzuführungsleitung 21 ist in dem gezeigten Ausführungsbeispiel aus einer axialen Bohrung 45 und einer in der Radachse befindlichen radialen Bohrung 46 gebildet, die in ihrem Verlauf in einem Bereich ineinander münden. In einem ersten Bereich von der Radachsenstirnwandung 20b ausgehend ist die axiale Bohrung 45 hierbei durch eine weitere Bohrung größeren Durchmessers erweitert, welche hier als Erweiterungsausnehmung 50 dient, die als Aufnahmeraum für einen Schmiernippel 49 dienen kann, über welchen Schmiermittel in die Schmiermittelzuführungsleitung eingebracht werden kann. Ausgehend von der Mündung der axialen Bohrung 45 in die Erweiterungsausnehmung 50 weist die axiale Bohrung 45 in der gezeigten Ausgestaltung in einem Bereich ein Gewinde auf, in das ein Schmiernippel 49 eingeschraubt ist. Die Radachse 4 überragt in ihrer Längserstreckung die Breite des Laufradblocks 1. Außerhalb des Laufradblocks 1 weist die Radachse 4 auf der Seite des ersten Gehäuseteils 2 eine erste Sicherungsausnehmung 18a sowie auf der Seite des zweiten Gehäuseteils 3 eine zweite Sicherungsausnehmung 19a auf. In der gezeigten Ausgestaltung sind diese Sicherungsausnehmungen 18a, 19a als umlaufende Nut ausgebildet. Die erste Sicherungsausnehmung 18a dient der axialen Positionierung eines ersten Sicherungselements 18b, so wie die zweite Sicherungsausnehmung 19a der axialen Positionierung eines zweiten Sicherungselements 19b dient. In Fig. 1a sind das erste sowie das zweite Sicherungselement 18b, 19b als Sicherungsringe ausgebildet. Das erste Sicherungselement 18b wirkt in der gezeigten Ausgestaltung mit der ersten Stirnwandung 5 des ersten Gehäuseteils 2 zusammen, und das zweite Sicherungselement 19b wirkt in der gezeigten Ausgestaltung mit der zweiten Stirnwandung 6 des zweiten Gehäuseteils 3 zusammen, wodurch in dieser Ausgestaltung der axiale Zusammenhalt des Laufradblocks 1 bewirkt wird. Die hierdurch sich ergebenden Sitzflächen der Radachse dienen als Gegenelement für das erste Sicherungselement 18b und das zweite Sicherungselement 19b, die in ihrer Zusammenwirkung gemeinsam mit der Radachse eine besonders stabile Verbindung des ersten Gehäuseteils mit dem zweiten Gehäuseteil ermöglichen und gleichzeitig eine hohe Steifheit des zusammengesetzten Gehäuses bewirken.

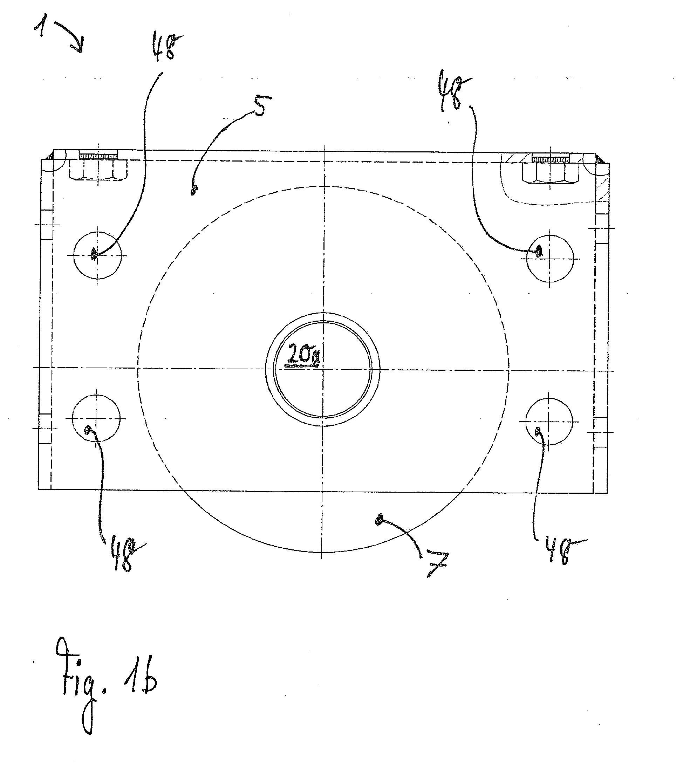

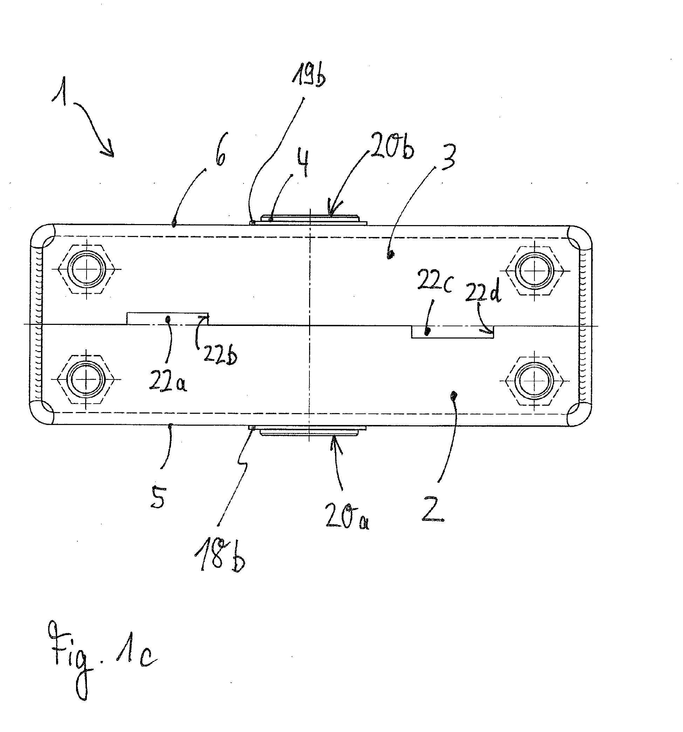

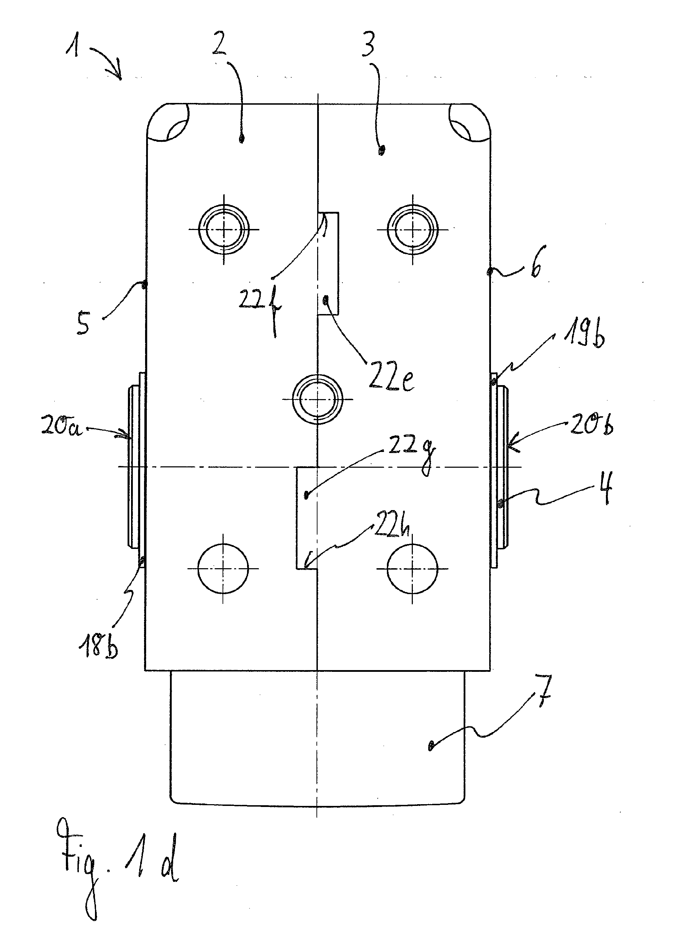

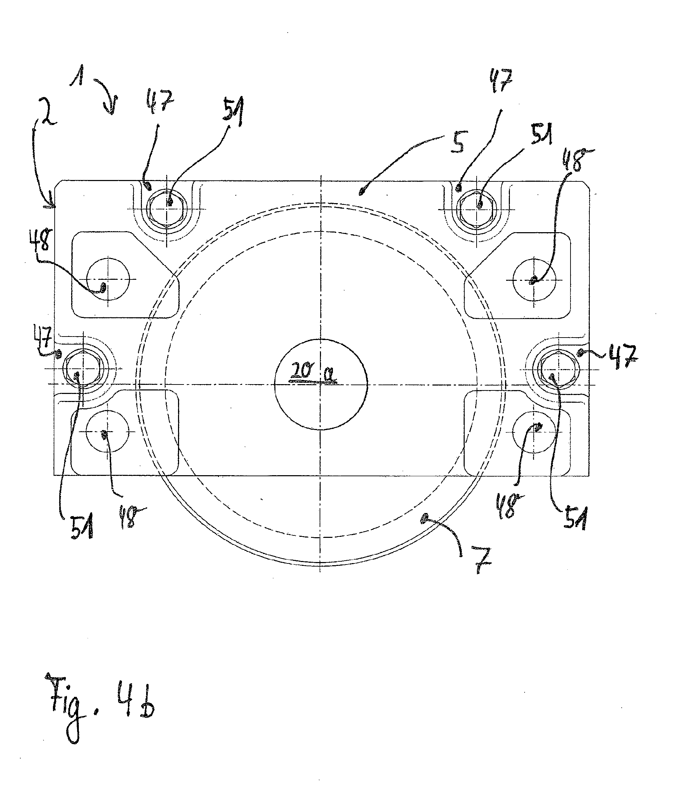

Aus Fig. 1 b ist eine Seitenansicht der in Fig. 1a gezeigten Ausgestaltung eines Laufradblocks 1 gezeigt. Die Stirnwandungen 5, 6 weisen Befestigungslöcher 48 zur Befestigung des Laufradblocks 1 an einer Befestigungsvorrichtung 14 auf, darüber hinaus sind jedoch keine weiteren in der Stirnwandung 5 angeordnete Löcher, beispielsweise für ein Einbringen von axialen Verbindungselementen 51, vorhanden, anders, als es beispielsweise in der in Fig. 4b gezeigten Ausgestaltung des Laufradblocks gezeigt ist. Diese Ausgestaltung weist unter anderem den Vorteil auf, dass bei einer Bewirkung eines ausreichenden axialen Zusammenhalts durch mit den Stirnwandungen 5, 6 zusammenwirkende Sicherungselemente 18b, 19b kein zusätzlicher Kraftschluss mehr zwingend erforderlich ist, um einen ausreichenden Zusammenhalt der beiden Gehäusehälften 2, 3 zu bewirken. In der gezeigten Ausgestaltung des Laufradblocks sind die Gehäusehälften 2, 3 bevorzugt aus einem Blech, insbesondere aus einem Stahlblech, hergestellt.

In Fig 1c ist eine Draufsicht der in Fig. 1a gezeigten Ausgestaltung eines Laufradblocks 1 dargestellt. Das erste Gehäuseteil 2 und das zweite Gehäuseteil 3 sind in dieser Ausgestaltung formschlüssig miteinander verbunden, wobei eine erste Stirnkante des ersten Gehäuseteils 2 und eine zweite Stirnkante des zweiten Gehäuseteils 3 aneinanderliegend positioniert sind. Der gezeigten Draufsicht kann entnommen werden, dass der Formschluss durch einen in der ersten Stirnkante des ersten Gehäuseteils 2 angeordneten Vorsprung 22a bewirkt wird, der mit einer korrespondierend angeordneten Aussparung 22b zusammenwirkt, welche in der zweiten Stirnkante des zweiten Gehäuseteils 3 angeordnet ist. Weiterhin wird der Formschluss in der gezeigten Ausgestaltung durch einen in der zweiten Stirnkante des zweiten Gehäuseteils 3 angeordneten Vorsprung 22c bewirkt, der mit einer korrespondierend angeordneten Aussparung 22d in der Stirnkante des ersten Gehäuseteils 2 zusammenwirkt. In der gezeigten Ausgestaltung überragt die Radachse 4 in ihrer axialen Erstreckung die axiale Erstreckung zwischen der ersten Stirnwandung 5 und der zweiten Stirnwandung 6. Weiterhin ist Fig. 1c zu entnehmen, dass weitgehend an der ersten Stirnwandung 5 anliegend ein erstes Sicherungselement 18 b an der Radachse 4 angeordnet ist, sowie weitgehend an der zweiten Stirnwandung 6 anliegend ein zweites Sicherungselement 19b an der Radachse 4 angeordnet ist, wobei jedes der beiden Sicherungselemente 18b, 19b in der gezeigten Ausgestaltung als Sicherungsring ausgebildet ist.

Aus Fig. 1d geht die Ausgestaltung des in Fig. 1a gezeigten Laufradblocks 1 in einer Vorderansicht hervor. Der gezeigten Ansicht ist zu entnehmen, dass auch die in der Vorderansicht gezeigten Stirnkanten Vorsprünge 22e und 22g aufweisen, welche mit Ausnehmungen 22f und 22h zusammenwirken und einen sehr guten Formschluss zur Folge haben.

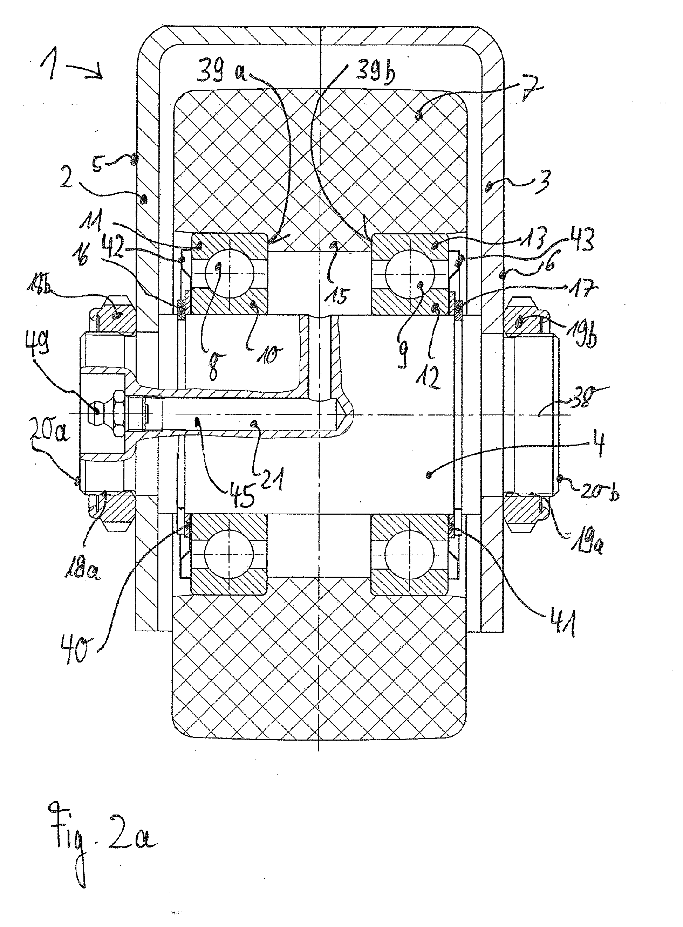

Fig. 2a ist eine weitere Ausgestaltung eines Laufradblocks in einer Vorderansicht im Schnitt dargestellt. Ein wesentlicher Unterschied der in Fig. 2a gezeigten weiteren Ausgestaltung, beispielsweise gegenüber der in Fig. 1a gezeigten Ausgestaltung, ist die Ausbildung der Sicherungsausnehmungen 18a, 19a und der Sicherungselemente 18b, 19b. Die Sicherungsausnehmungen 18a, 19a sind in Fig. 2a partiell mit einem Gewinde versehen, durch welche die axiale Positionierung der Sicherungselemente 18b, 19b bewirkt wird. Die Sicherungselemente 18b und 19b sind hierfür jeweils als Mutter mit Innengewinde ausgebildet. Weiterhin ist in Fig. 2a gezeigt, dass in dem Gewinde der axialen Bohrung 45 ein Schmiernippel 49 eingeschraubt ist, über den ein Nachschmieren der Lager erfolgen kann.

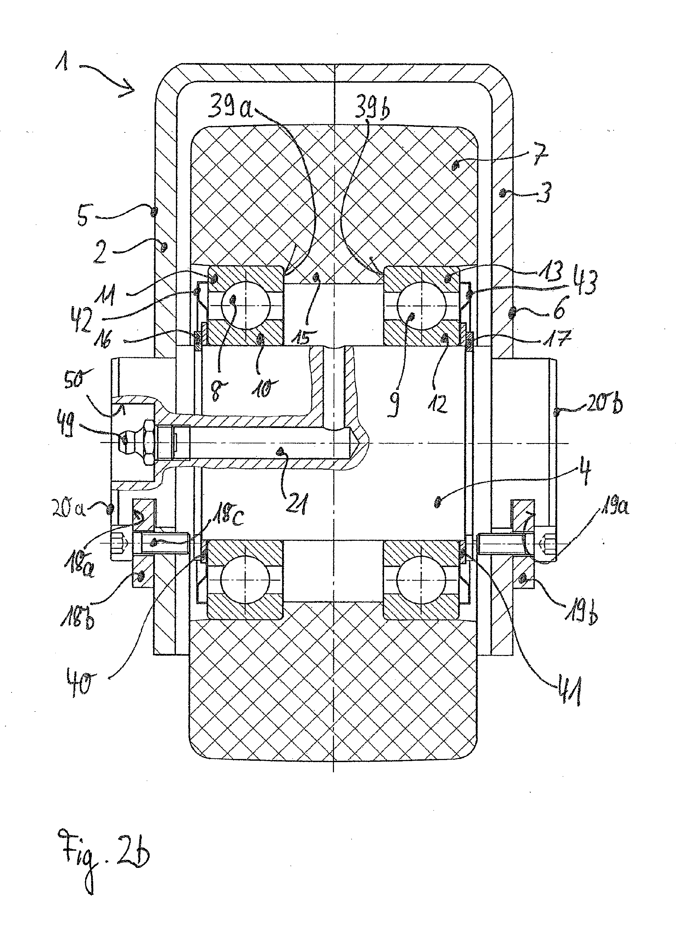

Eine weitere Ausgestaltung des Laufradblocks 1 ist in Fig. 2b gezeigt, wobei der Fig. 2b insbesondere eine weitere Ausgestaltung der Sicherungsausnehmungen 18a, 19a und der Sicherungselemente 18b, 19b zu entnehmen ist. In einem Bereich außerhalb des Laufradblocks 1, das heißt außerhalb des durch die Stirnwandungen 5, 6 begrenzten Bereichs, ist auf der Seite der ersten Stirnwandung 5 des ersten Gehäuseteils 2 die erste Sicherungsausnehmung 18a in der Radachse 4 derart ausgebildet, dass sie in dem Längsschnitt der Radachse als Kerbe erscheint, deren Form im Querschnitt der Achse beispielsweise einer Schnittfläche zweier Kreise oder aber einem Kreisabschnitt entsprechen kann. In diese Kerbe ist das erste Sicherungselement 18b eingebracht, welches in dieser Ausgestaltung ein Loch aufweist, durch das eine Gewindeschraube 18c geführt ist, mittels der das erste Sicherungselement 18b kraftschlüssig mit der Stirnseite 5 des ersten Gehäuseteils 2 verbunden ist. Die Ausgestaltung der zweiten Sicherungsausnehmung 19a sowie des zweiten Sicherungselements 19b auf der Seite der zweiten Stirnwandung 6 des zweiten Gehäuseteils 3 ist in Fig. 2b vergleichbar der Ausgestaltung der ersten Sicherungsausnehmung 18a und des ersten Sicherungselements 18b ausgeführt.

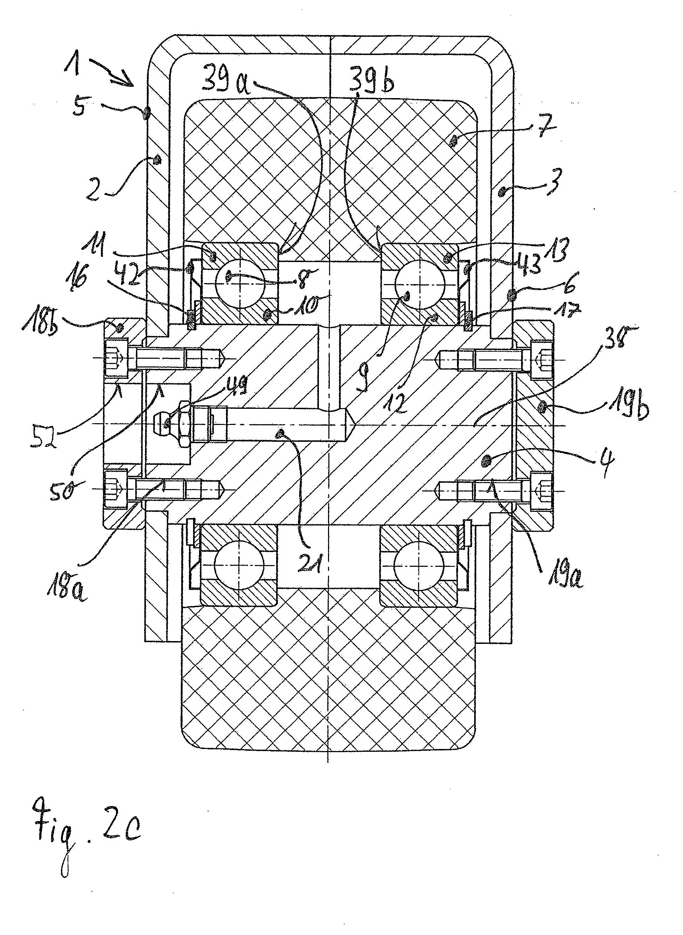

Eine weitere Ausgestaltung des Laufradblocks ist in Fig. 2c gezeigt. Ein wesentlicher Unterschied zwischen Fig. 2c und beispielsweise Fig. 2a oder Fig. 2b ist die Ausgestaltung der Sicherungsausnehmungen 18a, 19a und der Sicherungselemente 18b, 19b. Das erste Sicherungselement 18b ist als Scheibe ausgestaltet, deren Durchmesser größer ist als der Durchmesser des Radachsenlochs in der ersten Stirnwandung 5 des ersten Gehäuseteils 2. Das erste Sicherungselement 18b weist darüber hinaus ein Loch 52 auf, dessen Durchmesser dem Durchmesser der Erweiterungsausnehmung 50 entspricht. Ein Vorhandensein dieses Lochs in dieser Ausgestaltung ermöglicht einen Zugang zu dem Schmiernippel 49 auch bei einem montierten Laufradblock 1 mit an dem Laufradblock befestigtem erstem Sicherungselement 18b. Weiterhin befinden sich in dem ersten Sicherungselement 18b in der Ausgestaltung der Fig. 2c Löcher, durch welche Schrauben geführt sind, mittels denen das erste Sicherungselement 18b mit der Radachse 4 verbunden sind. Die Verbindung des ersten Sicherungselements 18b mit der Radachse erfolgt hierbei durch Befestigung der Schrauben durch deren Zusammenwirkung mit einer ersten Sicherungsausnehmung 18a, welche in dieser Ausgestaltung als von einer der Radachsenstirnseiten 20a, 20b ausgehende, in die Radachse 4 eingebrachte, und mit einem Innengewinde versehene Bohrung ausgebildet ist. Die Ausgestaltung des zweiten Sicherungselements 19b ist in Fig. 2c derjenigen des ersten Sicherungselements 18b ähnlich, jedoch weist das zweite Sicherungselement 19b kein weiteres Loch als diejenigen Löcher auf, durch welche Schrauben geführt sind.

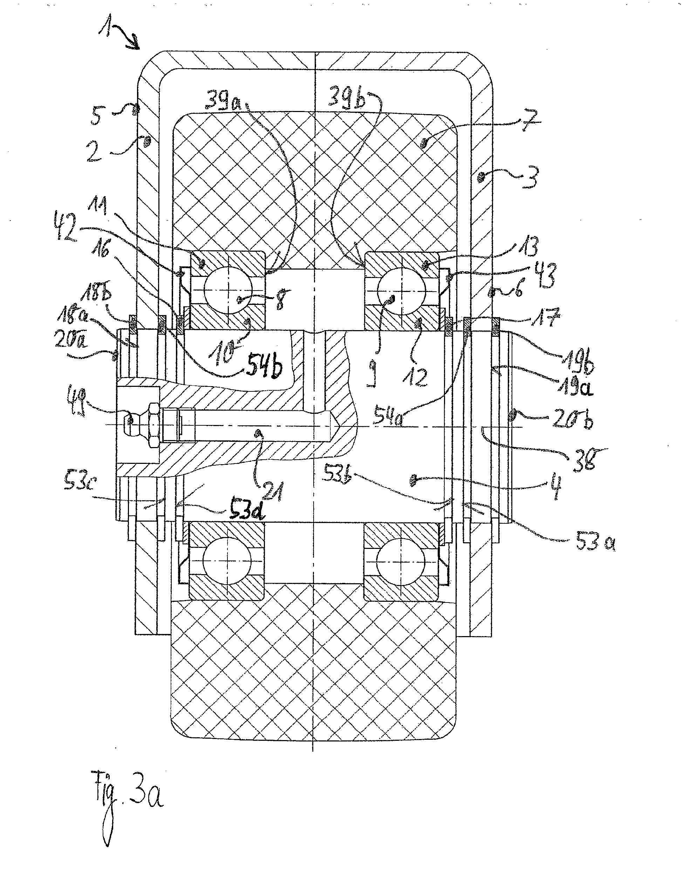

In einer weiteren Ausgestaltung eines Laufradblocks 1, die in Fig. 3a gezeigt ist, ist vorgesehen, dass die Grundform der Radachse 4 kreiszylindrisch ausgestaltet ist, und Abweichungen der kreiszylindrischen Grundform nur durch die Öffnungen einer Schmiermittelzuführungsleitung 21 und von Sicherungsausnehmungen 18a, 19a, 53a, 53b, 53c, 53d bewirkt werden. Die gezeigte Ausgestaltung ist hierbei im Wesentlichen der in Fig. 1a gezeigten Ausgestaltung ähnlich, jedoch überragt der Durchmesser der Radachse 4 entlang ihrer gesamten Längserstreckung nicht den Durchmesser der Radachsenlöcher. Abweichungen des Durchmessers der Radachse ergeben sich in der gezeigten Ausgestaltung hingegen lediglich durch die Sicherungsausnehmungen 18a, 19a, 53a, 53b, 53c, 53d. Für eine axiale Positionierung der Radachse 4 ist in der gezeigten Ausgestaltung jeweils an der Innenseite der ersten Stirnwandung 5 und der zweiten Stirnwandung 6 anliegend ein Sicherungsring 54b und 54a positioniert, wobei die Sicherungsringe 54a, 54b ihrerseits durch Sicherungsausnehmungen 53a, 53c in Ausbildung von umlaufenden Nuten axial positioniert sind.

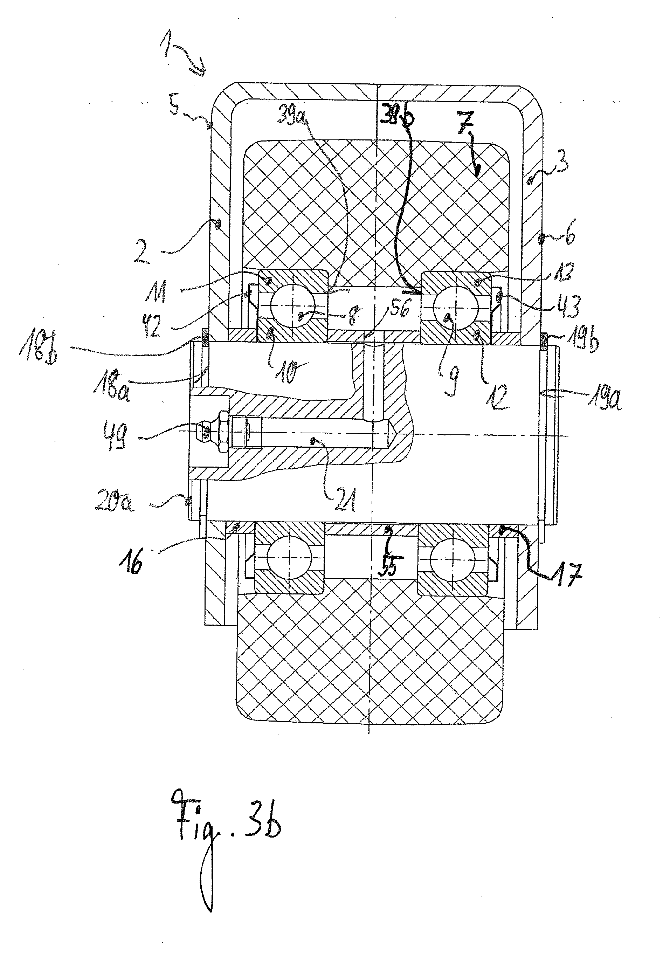

Eine weitere Ausgestaltung des Laufradblocks 1, die in Fig. 3b dargestellt ist, ähnelt der in Fig. 3a gezeigten Ausgestaltung. Als ein Unterschied zu der in Fig. 3a gezeigten Ausgestaltung sind das erste Halteelement 16 und das zweite Halteelement 17 als Distanzhülsen ausgestaltet, welche sich zwischen der Innenseite der jeweiligen Stirnwandung 5 und 6 und den Lagern 8 und 9 erstrecken und so die axiale Positionierung der Lager 8 und 9 in die jeweils vom anderen Lager wegweisende Richtung bewirken. Weiterhin ist zwischen den Lagern eine die Radachse umgreifende Lagerdistanzhülse 55 angeordnet, welche sich weitgehend entlang der gesamten Distanz zwischen dem ersten Lager 8 und dem zweiten Lager 9 erstreckt und somit eine axiale Positionierung der Lager 8 und 9 in die jeweils zu dem anderen Lager weisende Richtung bewirkt. Die Lagerdistanzhülse weist eine Schmieröffnung 56 auf, um eine Schmierung der Lager mittels durch die Schmiermittelzuführungsleitung 21 zugeführten Schmiermittels zu ermöglichen.

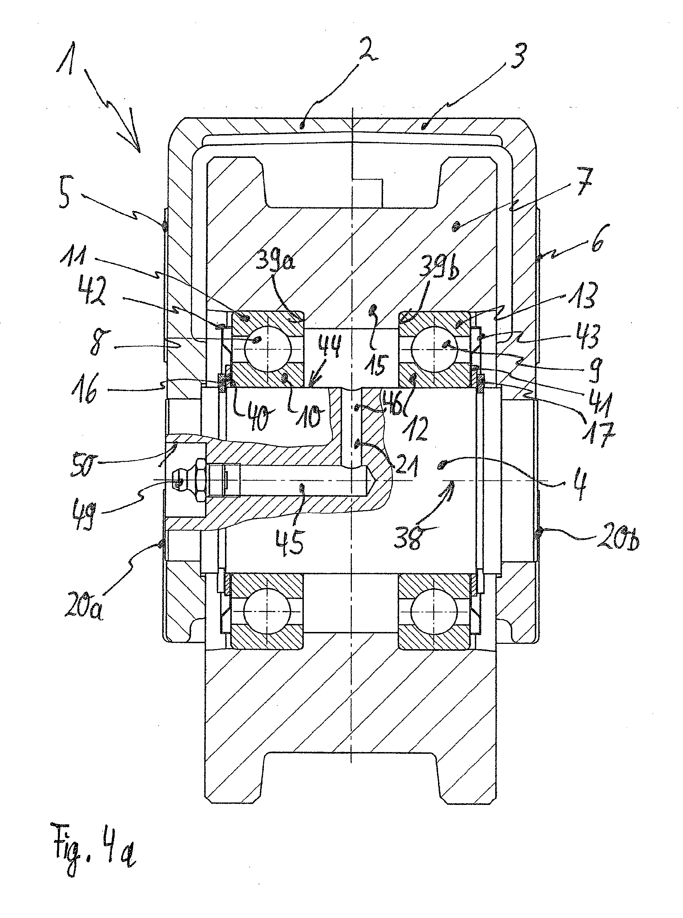

Fig. 4a zeigt eine weitere Ausgestaltung eines Laufradblocks 1 in einer Vorderansicht im Schnitt. Bei der in Fig. 4a dargestellten Ausgestaltung handelt es sich im Unterschied zu der in Fig. 1a dargestellten Ausgestaltung eines Laufradblocks um eine Ausgestaltung, in der das Gehäuse des Laufradblocks nicht bevorzugt aus einem Blech, sondern aus einem Gusseisen hergestellt ist. Aufgrund des im Vergleich zu der unter anderem in Fig. 1a gezeigten Blechvariante unterschiedlichen Werkstoffs des Laufradblockgehäuses erweisen sich einige konstruktive Details als vorteilhafter, was jedoch nicht ausschließt, dass die in Fig. 4a gezeigte konstruktive Ausgestaltung nicht auch mit einem Blechgehäuse ausgeführt werden könnte. Die in Fig. 4a gezeigte Ausgestaltung des Laufradblocks unterscheidet sich von der in Fig. 1a gezeigten Ausgestaltung hierbei insbesondere dahingehend, dass die axiale Erstreckung der Radachse 4 im Wesentlichen der axialen Erstreckung zwischen der ersten Stirnwandung 5 und der zweiten Stirnwandung 6 entspricht und der Zusammenhalt zwischen der ersten Gehäusehälfte 2 und der zweiten Gehäusehälfte 3 somit nicht mehr zumindest auch unter Zusammenwirkung der Stirnwandungen 5, 6 mit Sicherungselementen erfolgt.

Aus Fig. 4b geht die Ausgestaltung des in Fig. 4a gezeigten Laufradblocks 1 in einer Seitenansicht hervor. In dem gezeigten ersten Gehäuseteil 2 sind gegenüber der Ebene der ersten Stirnwandung 5 abgesetzte Vertiefungen 47 eingebracht, die mit Löchern versehen sind zur Aufnahme von axialen Verbindungselementen 51, wie sie in der gezeigten Ausgestaltung als Spannschrauben ausgebildet sind. Weiterhin sind in der gezeigten Ausgestaltung in den Stirnwandungen 5, 6 angeordnete Befestigungslöcher 48 vorhanden, welche der Befestigung des Laufradblocks an einer Befestigungsvorrichtung 14 dienen können.

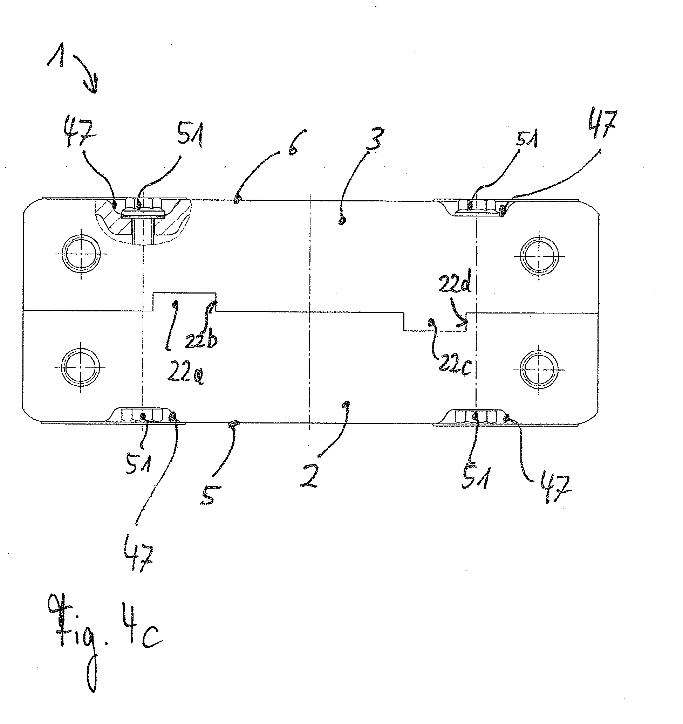

Aus Fig. 4c geht die Ausgestaltung des in Fig. 4a gezeigten Laufradblocks 1 in einer Draufsicht hervor. Das erste Gehäuseteil 2 und das zweite Gehäuseteil 3 sind in dieser Ausgestaltung formschlüssig miteinander verbunden, wobei eine erste Stirnkante des ersten Gehäuseteils 2 und eine zweite Stirnkante des zweiten Gehäuseteils 3 aneinanderliegend positioniert sind. Der gezeigten Draufsicht kann entnommen werden, dass der Formschluss durch einen in der ersten Stirnkante des ersten Gehäuseteils 2 angeordneten Vorsprung 22a bewirkt wird, der mit einer korrespondierend angeordneten Aussparung 22b zusammenwirkt, welche in der zweiten Stirnkante des zweiten Gehäuseteils 3 angeordnet ist. Weiterhin wird der Formschluss in der gezeigten Ausgestaltung durch einen in der zweiten Stirnkante des zweiten Gehäuseteils 3 angeordneten Vorsprung 22c bewirkt, der mit einer korrespondierend angeordneten Aussparung 22d in der Stirnkante des ersten Gehäuseteils 2 zusammenwirkt. Neben dem durch die in die Aussparungen 22b, 22d hineinragenden Vorsprünge 22a, 22c bewirkten Formschluss bewirken die Spannschrauben 51 einen kraftschlüssigen Zusammenhalt der beiden Gehäusehälften 2, 3.

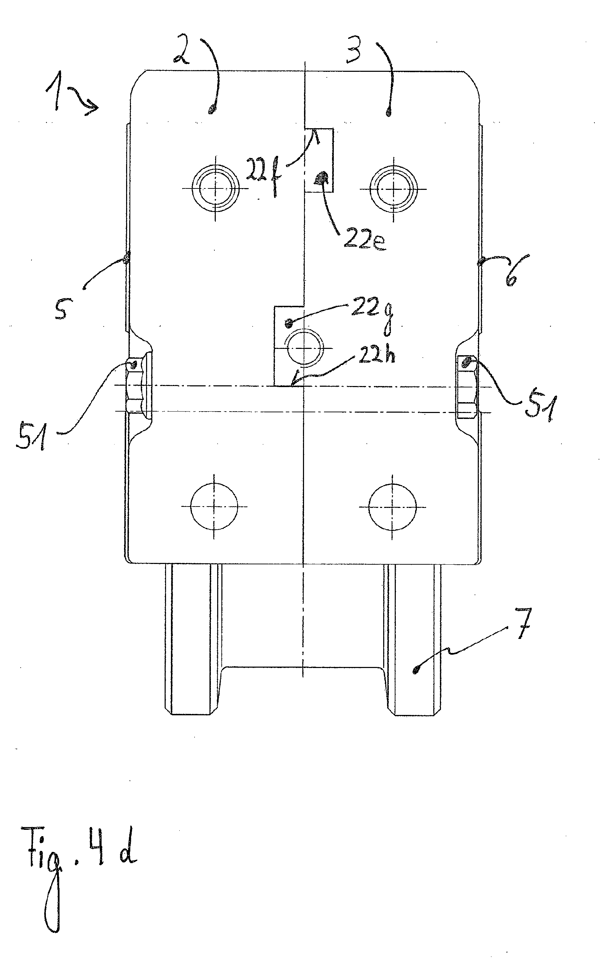

Aus Fig. 4d geht die Ausgestaltung des in Fig. 4a gezeigten Laufradblocks 1 in einer Vorderansicht hervor. In der gezeigten Ausgestaltung weisen auch die in der Vorderansicht zu sehenden Stirnkanten Vorsprünge 22e, 22g auf, die mit Ausnehmungen 22f, 22 h korrespondieren.

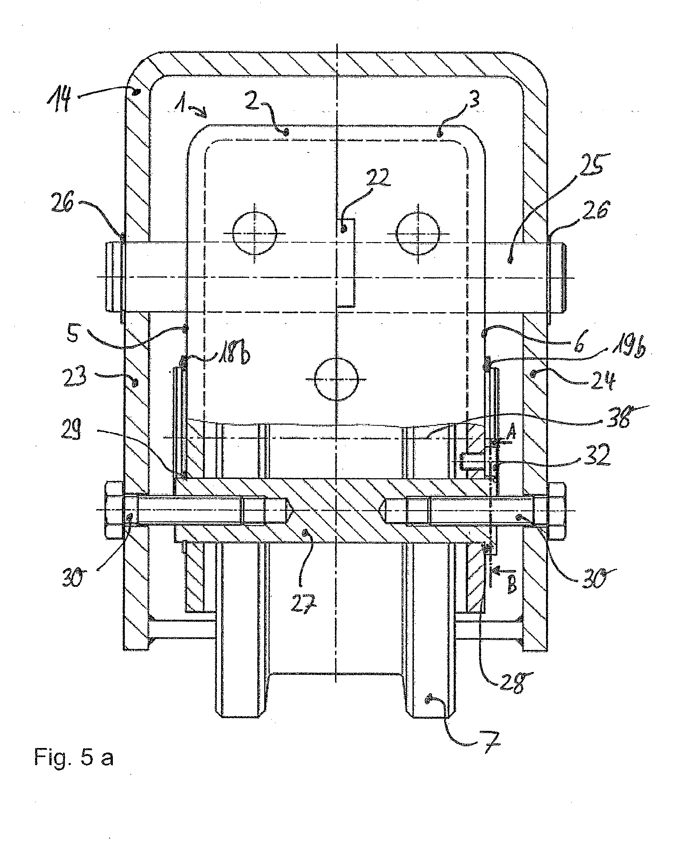

In Fig. 5a ist als ein Beispiel einer Möglichkeit zur Befestigung eine Befestigungsvorrichtung 14 des Laufradblocks 1 in Ausgestaltung des sogenannten Bolzenanschlusses gezeigt. Der Laufradblock 1 ist in dieser Ausgestaltung zwischen zwei Befestigungswänden 23, 24 positioniert, welche die Befestigungsvorrichtung 14 ausbilden. Durch jeweils zwei korrespondierende Tragebolzenlöcher, die in dieser Figur als Tragebolzenbohrungen ausgestaltet sind, und die sowohl in den Befestigungswänden 23, 24 als auch in den Stirnwandungen 5, 6 vorhanden sind, ist ein Tragebolzen 25 geführt. Die Tragebolzenlöcher sind hierbei oberhalb der Rotationsachse 38 des Laufrads 7 angeordnet. Jeweils an den Außenseiten der Befestigungswandungen 23, 24 anliegend sind Sicherungsringe 26 an dem Tragebolzen 25 angeordnet, um dessen axiale Positionierung relativ zur Befestigungsvorrichtung 14 zu bewirken. Unterhalb der Rotationsachse 38 des Laufrads 7 sind in den Stirnwandungen 5, 6 der Gehäuseteile 2, 3 Positionierbolzenlöcher angeordnet, durch die ein Positionierbolzen 27 geführt ist. Dieser Positionierbolzen 27 wird in der gezeigten Ausgestaltung in axialer Richtung durch eine von außen an der zweiten Stirnwandung 6 des zweiten Gehäuseteils 3 sich abstützende Positionierbolzenkrempe 28 sowie durch ein von außen an der ersten Stirnwandung 5 des ersten Gehäuseteils 2 anliegendes Positionierbolzensicherungselement 29 bewirkt, welches in Fig. 5a als in einer Positionierbolzensicherungsausnehmung angeordneter Sicherungsring ausgebildet ist, wobei die Positionierbolzensicherungsausnehmung als umlaufende Nut ausgestaltet ist. Der Positionierbolzen 27, und mit diesem auch der Laufradblock 1, wird in axialer Richtung relativ zu den Befestigungswandungen 23, 24 mittels zweier Positionierbolzenverbindungselemente 30 positioniert. In der gezeigten Ausgestaltung sind die Positionierbolzenverbindungselemente 30 als Gewindeschrauben ausgestaltet, deren Köpfe an den Außenseiten der Befestigungswandungen 23, 24 anliegend mit diesen kraftschlüssig verbindend zusammenwirken, wodurch der Kraftschluss durch das Zusammenwirken des Außengewindes der Positionierbolzensicherungselemente 30 mit entsprechend an beiden Seiten des Positionierbolzens 27 angeordneten, mit einem Innengewinde versehenen, Bohrungen bewirkt wird.

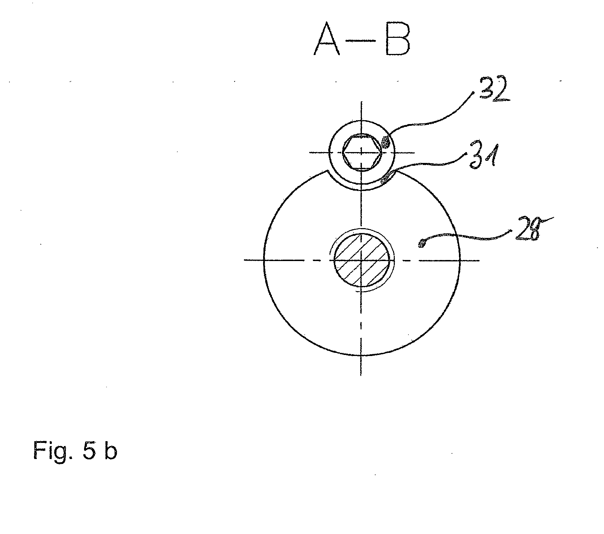

In Fig 5b ist ein Schnitt durch die in Fig. 5a gezeigte Ausgestaltung mit der Blickrichtung entlang der Pfeile A und B dargestellt. Es ist die Positionierbolzenkrempe 28 gezeigt, welche eine Drehsicherungsausnehmung 31 aufweist, welche in der Form einer Schnittfläche zweier teilweise übereinanderliegender Kreise unterschiedlichen Durchmessers ausgebildet ist, wobei der größere Durchmesser derjenige der Positionierbolzenkrempe 28 ist. In dieser Ausnehmung ist eingepasst ein Drehsicherungsgegenelement 32 angeordnet, welches in der gezeigten Figur als ein Kopf einer axial in der zweiten Stirnwandung 6 des zweiten Gehäuseteils 3 befestigten Schraube ausgebildet ist.

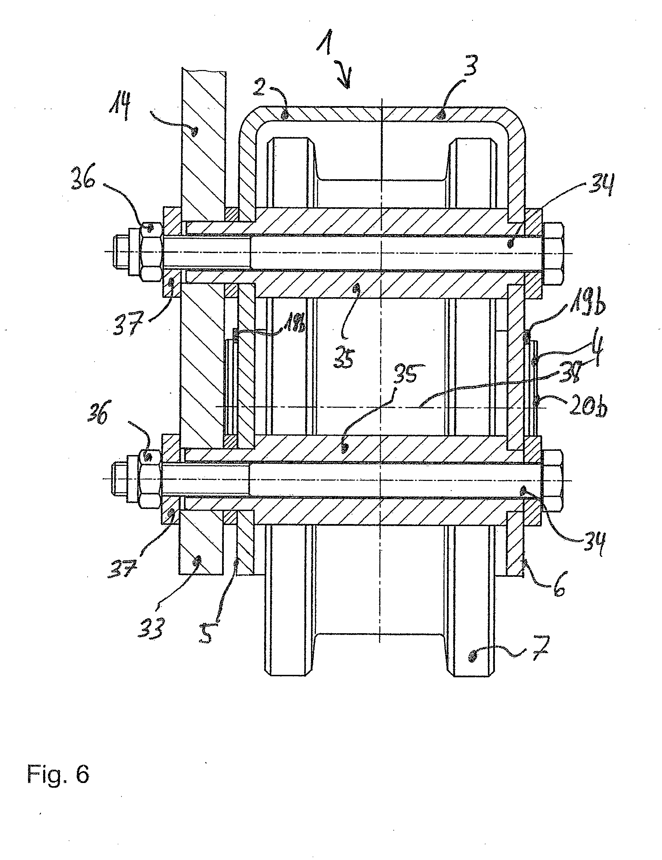

In Fig. 6 ist als eine weitere Möglichkeit zur Befestigung des Laufradblocks 1 eine Ausgestaltung des sogenannten Wangenanschlusses gezeigt. Der Laufradblock 1 ist hierbei reversibel lösbar an einer Befestigungsvorrichtung 14 befestigt, welche als Befestigungswange ausgebildet ist. Die Verbindung des Laufradblocks mit der Befestigungswange erfolgt hierbei durch kraftschlüssige Verbindung mit einem Befestigungswangenverbindungselement 34. In der gezeigten Ausgestaltung ist das Befestigungswangenverbindungselement 34 als Gewindeschraube in Zusammenwirkung mit einer Gegenmutter 36 ausgestaltet, die mit einer Fläche der Befestigungsvorrichtung 14 zusammenwirkt, wobei zwischen der Gegenmutter und der Befestigungsvorrichtung 14 eine Unterlegscheibe 37 angeordnet ist. Hierbei reicht das als Gewindeschraube ausgebildete Befestigungswangenverbindungselement 34 innerhalb einer Passmuffe 35 durch die zweite Stirnwandung 6 des zweiten Gehäuseteils 3, die erste Stirnwandung 5 des ersten Gehäuseteils 2 sowie die Befestigungswange hindurch. In der gezeigten Ausgestaltung sind zwei gleiche Befestigungswangenverbindungselemente 34 gezeigt, hiervon jeweils einmal oberhalb und unterhalb der Rotationsachse 38 der Radachse 4.

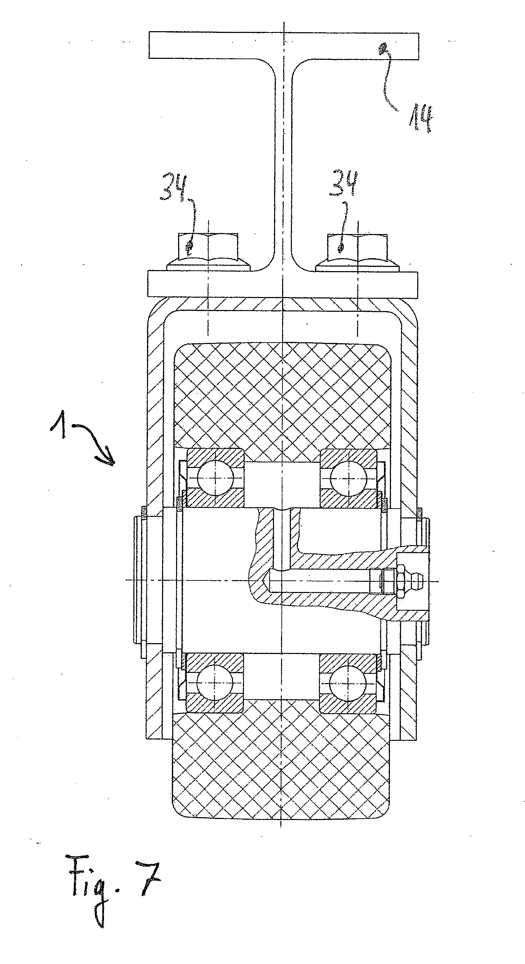

In Fig. 7 ist als eine weitere Möglichkeit zur Befestigung des Laufradblocks 1 eine Ausgestaltung des sogenannten Kopfanschlusses gezeigt. Die Befestigungsvorrichtung 14 ist hierbei als Träger ausgebildet, an welchen der Laufradblock 1, hier in der in Fig. 1a bis Fig. 1d gezeigten Ausgestaltung, mittels Befestigungswangenverbindungselementen 34 auf der Kopfseite des Laufradblocks 1 befestigt wird.

## Patentansprüche

1. Laufradblock (1), umfassend
● ein wenigstens zu einer Seite offenes Blechgehäuse, aufweisend ein erstes Gehäuseteil (2) mit einer ersten Stirnkante und ein zweites Gehäuseteil (3) mit einer zweiten Stirnkante,
● eine Radachse (4) mit einer Radachsenmanteloberfläche (44),
● ein erstes Radachsenloch, angeordnet an einer ersten Stirnwandung (5) des ersten Gehäuseteils (2), und ein zweites Radachsenloch, angeordnet an einer zweiten Stirnwandung (6) des zweiten Gehäuseteils (3), wobei das erste und das zweite Radachsenloch zueinander zentriert ausgerichtet sind, zur Aufnahme und zur radialen Positionierung der Radachse (4) relativ zum Laufradblock,
● ein erstes Lager (8) mit einem ersten Innenring (10) und einem ersten Außenring (11) und ein zweites Lager (9) mit einem zweiten Innenring (12) und einem zweiten Außenring (13), wobei das erste Lager (8) weniger weit von der ersten Stirnwandung (5) beabstandet ist als das zweite Lager (9), bevorzugt das erste Lager und/oder das zweite Lager austauschbar sind,
● ein, bevorzugt nabenloses und als Hohlrad ausgebildetes, Laufrad (7) mit einer Rotationsachse (38), welches mit dem ersten Lager (8) und dem zweiten Lager (9) gelagert ist,
wobei das Laufrad (7) mit dem ersten Außenring (11) des ersten Lagers (8) und dem zweiten Außenring (13) des zweiten Lagers (9) gelagert ist, und wobei der Laufradblock (1) mit zumindest einer seiner Wandungen reversibel lösbar an einer Befestigungsvorrichtung (14) befestigt ist.

2. Laufradblock (1) nach Anspruch 1, **dadurch gekennzeichnet, dass** die Radachse (4) in einem außerhalb des Blechgehäuses befindlichen Bereich an der Seite des ersten Gehäuseteils (2) zumindest eine erste Sicherungsausnehmung (18a) aufweist, mittels derer zumindest ein erstes Sicherungselement (18b) positioniert ist, und dass die Radachse (4) in einem außerhalb des Gehäuses befindlichen Bereich an der Seite des zweiten Gehäuseteils (3) zumindest eine zweite Sicherungsausnehmung (19a) aufweist, mittels derer zumindest ein zweites Sicherungselement (19b) positioniert ist, wobei das erste Sicherungselement (18b) mit der ersten Stirnwandung (5) und das zweite Sicherungselement (19b) mit der zweiten Stirnwandung (6) zusammenwirkt und durch dieses Zusammenwirken ein axialer Zusammenhalt des Laufradblocks (1) bewirkt wird.

3. Laufradblock (1) nach einem der vorhergehenden Ansprüche, **dadurch gekennzeichnet, dass** die Radachse oder mit der Radachse verbundene Elemente Begrenzungsflächen aufweisen, deren Abstand so bemessen ist, dass die Innenseiten der Stirnwandungen (5, 6) der Gehäuseteile (2, 3) sich auf den Begrenzungsflächen abstützen, bevorzugt die Begrenzungsflächen hierdurch eine Stabilisierung des Laufradblocks (1) bewirken.

4. Laufradblock (1) nach einem der vorhergehenden Ansprüche, **dadurch gekennzeichnet, dass**
■ das Laufrad (7) zumindest eine zwischen dem ersten Lager (8) und dem zweiten Lager (9) angeordnete, zu der Rotationsachse (38) des Laufrads (7) hin gerichtete, radiale Erhebung (15) aufweist, deren radiale Begrenzungsflächen (39) eine axiale Positionierung des ersten Lagers (8) und des zweiten Lagers (9) in der jeweils von einem Lager zum anderen Lager weisenden Richtung bewirken, und/oder
■ dass zwischen dem ersten Lager (8) und der ersten Stirnwandung (5) zumindest ein erstes Halteelement (16) angeordnet ist zur axialen Positionierung des ersten Lagers (8) in die vom zweiten Lager (9) fortweisende Richtung, und dass zwischen dem zweiten Lager (9) und der zweiten Stirnwandung (6) zumindest ein zweites Halteelement (17) angeordnet ist zur axialen Positionierung des zweiten Lagers (9) in die vom ersten Lager (8) fortweisende Richtung.

5. Laufradblock (1) nach einem der vorhergehenden Ansprüche, **dadurch gekennzeichnet, dass** die Radachse (4) zumindest eine von einer der Radachsenstirnseiten (20a, 20b) zu der Radachsenmanteloberfläche verlaufende Schmiermittelzuführungsleitung (21) aufweist zur Ermöglichung eines Einführens von Schmiermittel in das Innere des Laufradblocks (1) ohne die vorherige Demontage des Laufradblocks (1).

6. Laufradblock (1) nach einem der vorhergehenden Ansprüche, **dadurch gekennzeichnet, dass** das erste Gehäuseteil (2) und das zweite Gehäuseteil (3) formschlüssig und/oder lösbar miteinander verbunden sind.

7. Laufradblock (1) nach einem der vorhergehenden Ansprüche, **dadurch gekennzeichnet, dass** die erste Stirnkante des ersten Gehäuseteils (2) zumindest einen Vorsprung (22a, 22e) und/oder zumindest eine Aussparung (22d, 22h) sowie die zweite Stirnkante des zweiten Gehäuseteils hierzu korrespondierend zumindest eine Aussparung (22b, 22f) und/oder zumindest einen Vorsprung (22c, 22g) aufweist zur Bewirkung eines formschlüssigen Passsitzes der Stirnkanten der Gehäuseteile.

8. Laufradblock (1) nach einem der vorhergehenden Ansprüche, **dadurch gekennzeichnet, dass** die Form des ersten Gehäuseteils (2) und des zweiten Gehäuseteils (3) identisch ist.

9. Laufradblock (1) nach einem der vorhergehenden Ansprüche, **dadurch gekennzeichnet, dass** die Befestigungsvorrichtung (14) als Befestigungswandungspaar, aufweisend eine erste Befestigungswandung (23) mit einer ersten Außenfläche und eine zweite Befestigungswandung (24) mit einer zweiten Außenfläche, ausgestaltet ist, welches den Laufradblock (1) in zu dessen Stirnwandungen (5, 6) paralleler Orientierung angeordnet umgibt,
wobei
der Laufradblock (1) an zumindest einem Tragebolzen (25) aufgehängt ist, der
● durch jeweils paarweise zueinander zentrierte Tragebolzenlöcher in den Stirnwandungen (5, 6) des Laufradblocks (1) und den Befestigungswandungen (23, 24) des Befestigungswandungspaars relativ zu der Befestigungsvorrichtung (14) und zum Laufradblock (1) radial positioniert und
● durch mit den Außenflächen der Befestigungswandungen (23, 24) des Befestigungswandungspaars zusammenwirkende Tragebolzensicherungselemente (26) relativ zum Befestigungswandungspaar axial positioniert
ist;
und wobei zumindest ein Positionierbolzen (27) durch in den Stirnwandungen (5, 6) des Laufradblocks (1) befindliche Positionierbolzenlöcher relativ zum Laufradblock (1) radial positioniert angeordnet ist.

10. Laufradblock (1) nach Anspruch 9, **dadurch gekennzeichnet, dass** der Positionierbolzen (27) mittels jeweils zumindest eines auf jeder Seite des Befestigungswandungspaars durch die jeweilige Befestigungswandung in den Positionierbolzen (27) eingebrachten axialen Positionierbolzenverbindungselements (30) relativ zum Befestigungwandungspaar axial positioniert ist.

11. Laufradblock (1) nach Anspruch 9 oder nach Anspruch 10, **dadurch gekennzeichnet, dass** der Positionierbolzen (27) zumindest eine Positionierbolzenkrempe (28) aufweist, welche in Zusammenwirkung mit einem lösbar oder unlösbar an dem Positionierbolzen angeordneten Positionierbolzensicherungselement (29) eine axiale Positionierung des Positionierbolzens (27) relativ zum Laufradblock (1) bewirkt und welche eine Drehsicherungsausnehmung (31) aufweist, die ein korrespondierendes Drehsicherungsgegenelement (32) in formschlüssiger Verbindung zumindest teilweise umgreift zur Verhinderung eines Verdrehens des Positionierbolzens (27) um dessen Rotationsachse.

12. Laufradblock (1) nach einem der Ansprüche 1 bis 8, **dadurch gekennzeichnet, dass** die Befestigungsvorrichtung (14) als Befestigungswange (33) ausgestaltet ist, an welcher der Laufradblock (1) mit zumindest einem axialen Befestigungswangenverbindungselement (34) zumindest kraftschlüssig befestigt ist und/oder dass die Befestigungsvorrichtung (14) als Träger ausgebildet ist, an welcher der Laufradblock (1) an zumindest einer Kopfwandung mit zumindest einem Befestigungswangenverbindungselement (34) zumindest kraftschlüssig befestigt ist.

13. Verfahren zur reversiblen Montage eines an einer Befestigungsvorrichtung (14) befestigten Laufradblocks (1) aus Laufradblockbauteilen, wobei der Laufradblock ein wenigstens zu einer Seite offenes Blechgehäuse umfasst, **dadurch gekennzeichnet, dass** eine Radachse (4) durch ein in einer ersten Stirnwandung (5) eines ersten Gehäuseteils (2) angeordnetes Radachsenloch radial positioniert wird, und Laufradblockbauteile in von dem ersten Gehäuseteil (2) fortweisender Richtung einer vorgesehenen Anordnungsreihenfolge entsprechend an der Radachse (4) anliegend und/oder an zu der Radachse (4) konzentrischen Bauteilen anliegend die Radachse (4) umgrenzend angeordnet werden.

14. Verfahren nach Anspruch 13, **dadurch gekennzeichnet, dass** Sicherungselemente an der Radachse (4) in dafür vorgesehenen Sicherungsausnehmungen zwischen einem die Radachse (4) umgrenzenden ersten Lager (8) und der ersten Stirnwandung (5) des ersten Gehäuseteils (2) und zwischen einem die Radachse (4) umgrenzenden zweiten Lager (9) und einer zweiten Stirnwandung (6) eines zweiten Gehäuseteils (3) angeordnet werden zur axialen Positionierung des ersten Lagers (8) und des zweiten Lagers (9).

15. Verfahren nach Anspruch 13 oder nach Anspruch 14, **dadurch gekennzeichnet, dass** Sicherungselemente (18b, 19b) an der Radachse (4) in dafür vorgesehenen Sicherungsausnehmungen (18a, 19a) an den Außenflächen der Stirnwandungen (5, 6) anliegend angeordnet werden zum Zusammenhalt der Gehäuseteile (2, 3) durch reversibel lösbare und kraftschlüssige Verbindung der Sicherungselemente (18b, 19b) mit den Außenseiten der Stirnwandungen (5, 6).

16. Verfahren nach einem der Ansprüche 13 bis 15, **dadurch gekennzeichnet, dass** zumindest ein Tragebolzen (25) durch in den Wandungen eines den Laufradblock (1) von außen U-förmig umfassenden Befestigungswandungspaars, aufweisend eine erste Befestigungswandung (23) und eine zweite Befestigungswandung (24), sowie in den Gehäuseteilen des Laufradblocks (1) befindliche Tragebolzenlöcher geschoben wird und durch von außen an den Befestigungswandungen (23, 24) kraftschlüssig reversibel lösbar befestigte Tragebolzensicherungselemente (26) axial positioniert wird.

17. Verfahren nach Anspruch 16, **dadurch gekennzeichnet, dass** relativ zum Befestigungswandungspaar die axiale Positionierung des Laufradblocks (1) durch zumindest ein an jeder Seite des Befestigungswandungspaars angeordnetes axiales Positionierbolzenverbindungselement (30) erfolgt, und die Positionierbolzenverbindungselemente (30) lösbar mit einem Positionierbolzen (27) verbunden werden und kraftschlüssig reversibel lösbar mit den Befestigungswandungen verbunden werden.
